(19) Europäisches Patentamt
European Patent Office
Office européen des brevets

(11) EP 4 697 428 A1

# (12) EUROPEAN PATENT APPLICATION

published in accordance with Art. 153(4) EPC

(43) Date of publication:
**18.02.2026 Bulletin 2026/08**

(21) Application number: **24897995.7**

(22) Date of filing: **19.11.2024**

(51) International Patent Classification (IPC):
***H01M 10/0567*** (2010.01) ***H01M 4/58*** (2010.01)
***H01M 10/052*** (2010.01) ***H01M 4/38*** (2006.01)
***H01M 4/48*** (2010.01) ***H01M 4/583*** (2010.01)
***H01M 4/587*** (2010.01) ***H01M 4/02*** (2006.01)

(52) Cooperative Patent Classification (CPC):
**H01M 4/02; H01M 4/38; H01M 4/48; H01M 4/58; H01M 4/583; H01M 4/587; H01M 10/052; H01M 10/0567;** Y02E 60/10

(86) International application number:
**PCT/KR2024/018286**

(87) International publication number:
**WO 2025/116399 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.11.2023 KR 20230167269**
**18.11.2024 KR 20240164617**

(71) Applicant: **LG Energy Solution, Ltd.**
**Seoul 07335 (KR)**

(72) Inventors:
- **JEONG, You Kyeong**
  **Daejeon 34122 (KR)**
- **HAN, Jun Hyeok**
  **Daejeon 34122 (KR)**
- **OH, Young Ho**
  **Daejeon 34122 (KR)**
- **KO, Yoon Seok**
  **Daejeon 34122 (KR)**
- **IM, Tae Yeong**
  **Daejeon 34122 (KR)**
- **SUH, Soo Min**
  **Daejeon 34122 (KR)**
- **AHN, Kyoung Ho**
  **Daejeon 34122 (KR)**
- **LEE, Chul Haeng**
  **Daejeon 34122 (KR)**

(74) Representative: **Hoffmann Eitle**
**Patent- und Rechtsanwälte PartmbB**
**Arabellastraße 30**
**81925 München (DE)**

## (54) LITHIUM SECONDARY BATTERY

(57) The present disclosure relates to a lithium secondary battery with improved high-temperature cycle properties, and specifically, in a lithium secondary battery including a positive electrode, a negative electrode, a separator, and an electrolyte, the positive electrode includes a lithium iron phosphorous oxide as a positive electrode active material, wherein the loading amount of the positive electrode is 32 mg/cm$^2$ to 60 mg/cm$^2$, and the electrolyte includes a lithium salt, a first organic solvent, a second organic solvent, a first additive, and a second additive, wherein the first organic solvent is a cyclic lactone compound, the second organic solvent is a carbonate-based organic solvent, the first additive is a lithium nitrate ($LiNO_3$), and the second additive is a sulfonyl imide compound.

EP 4 697 428 A1

## Description

## TECHNICAL FIELD

### Cross-reference to Related Applications

This application claims the benefit of Korean Patent Application Nos. 10-2023-0167269, filed on November 27, 2023, and 10-2024-0164617, filed on November 18, 2024, in the Korean Intellectual Property Office, the disclosures of which are incorporated herein in their entirety by reference.

### Technical Field

The present disclosure relates a lithium secondary battery, and more particularly, to a lithium secondary battery with improved high-temperature cycle properties.

## BACKGROUND ART

In recent years, lithium secondary batteries have been used in many applications as well as portable electronic devices such as mobile phones, personal digital assistants (PDAs), and laptop computers. Particularly, due to the growing interest in environmental issues, research has been actively conducted on a lithium secondary battery having a high energy density and a high discharge voltage as a driving source of electric vehicles capable of replacing vehicles using fossil fuel, such as gasoline vehicles and diesel vehicles, which are one of the main causes of air pollution, and some of such lithium secondary batteries are in a commercially available stage.

Meanwhile, in order to use the lithium secondary battery as a driving source of an electric vehicle, a high output may be stably maintained at a high temperature and a high voltage. To this end, in the lithium secondary battery, a carbon material, and a lithium metal, a sulfur compound, a silicon compound, a tin compound, and the like are being considered to be used as a main component of a negative electrode active material, and a lithium-containing cobalt oxide ($LiCoO_2$) or a nickel-based lithium transition metal oxide is mainly used as a positive electrode active material.

However, in the case of the lithium-containing cobalt oxide, the energy density and output properties reach practical limits, and particularly, if used in high energy density application field, the structural instability of the lithium-containing cobalt oxide causes structural deformation in a high-temperature charge state, as well as oxygen release in the structure, and an exothermic reaction with an electrolyte in a battery, thereby causing secondary battery explosion. In the case of the nickel-based lithium transition metal oxide, the output rapidly decreases in a low SOC section (e.g., SOC 30% or less), so that there is a disadvantage in that a usable SOC section is significantly limited, and as a result, there is a limitation in applying the nickel-based lithium transition metal oxide in a field in which output properties are particularly important, such as an electric vehicle. Particularly, the nickel-based lithium transition metal oxide has low structural stability, and thus, if exposed to a high temperature or a high voltage, a transition metal in a positive electrode active material is eluted, or a side reaction with an electrolyte is caused, so that there is a problem in that battery performance is rapidly degraded.

Recently, in order to solve the above-described problems, a method of using a lithium iron phosphorous oxide having an olivine structure with excellent high-temperature stability instead of a nickel-based lithium transition metal oxide has been studied.

However, the lithium iron phosphorous oxide has a lower theoretical capacity than a nickel-based lithium transition metal oxide typically used, and thus, has a disadvantage of having a relatively low energy density compared to the nickel-based lithium transition metal oxide when designing an electrode of the same condition.

In order to solve the above-described problem, in recent years, there has been an attempt to use a high-loading electrode in which the amount (loading amount) of an electrode active material coated per area is increased when applying a lithium iron phosphorous oxide.

However, the high-loading electrode is designed to increase the degree of application of an active material and to increase the density of an electrode, so that the degree of electrode compression is very large, and as a result, a porous structure inside the electrode is insufficient, so that there is a disadvantage in that electrolyte impregnation properties are degraded. The above-described degradation in electrolyte impregnation properties causes degradation in "charge transfer," which is a reaction between lithium ions and electrons, which may result in an increase in battery resistance.

Accordingly, there is a demand for the development of a new secondary battery configuration capable of improving electrolyte impregnation properties, and at the same time, improving charge transfer properties when manufacturing a secondary battery to which a high-loading electrode is applied.

## DISCLOSURE OF THE INVENTION

## TECHNICAL PROBLEM

In order to solve the above-described problem, the present disclosure is to provide a lithium secondary battery in which electrolyte impregnation properties may be improved by using an electrolyte having a specific composition together when applying a high-loading positive electrode, and at the same time, a charge transfer phenomenon may be increased by forming a stable film on the surface of an electrode, and as a result, an increase in resistance may be suppressed during high-temperature storage, and an excellent cycle capacity retention rate may be secured.

## TECHNICAL SOLUTION

[1] The present disclosure provides a lithium secondary battery including a positive electrode, a negative electrode, a separator, and an electrolyte, wherein the positive electrode includes a lithium iron phosphorous oxide as a positive electrode active material, and the loading amount of the positive electrode is 32 mg/cm$^2$ to 60 mg/cm$^2$, the electrolyte includes a lithium salt, a first organic solvent, a second organic solvent, a first additive, and a second additive, wherein the first organic solvent is a cyclic lactone compound, the second organic solvent is a carbonate-based organic solvent, the first additive is a lithium nitrate ($LiNO_3$), and the second additive is a sulfonyl imide compound.
[2] In [1] above, the present disclosure provides a lithium secondary battery, wherein the lithium iron phosphorous oxide is a compound represented by Formula 1 below.

[Formula 1] $Li_{1+a}Fe_xM_y(PO_{4-b})X'_b$

In [Formula 1] above, M is any one selected from the group consisting of Al, Mg, Ni, Co, Mn, Ti, Ga, Cu, V, Nb, Zr, Ce, In, Zn, or Y, X' is one or more elements selected from the group consisting of F, S, or N, and $-0.5 \leq a \leq 0.5$, $0 < x \leq 1$, $0 \leq y \leq 1$, and $0 \leq b \leq 0.3$.

[3] In [1] or [2] above, the present disclosure provides a lithium secondary battery, wherein the lithium iron phosphorous oxide is a lithium iron phosphate ($LiFePO_4$) or a lithium manganese iron phosphate ($LiFeMnPO_4$).
[4] In at least one among [1] to [3] above, the present disclosure provides a lithium secondary battery, wherein the loading amount of the positive electrode is 40 mg/cm$^2$ to 60 mg/cm$^2$.
[5] In at least one among [1] to [4] above, the present disclosure provides a lithium secondary battery, wherein the cyclic lactone compound includes gamma-butyrolactone.
[6] In at least one among [1] to [5] above, the present disclosure provides a lithium secondary battery, wherein the carbonate-based organic solvent includes a cyclic carbonate-based organic solvent.
[7] In at least one among [1] to [6] above, the present disclosure provides a lithium secondary battery, wherein the first organic solvent and the second organic solvent are present in a volume ratio of 50:50 to 99:1.
[8] In at least one among [1] to [7] above, the present disclosure provides a lithium secondary battery, wherein the first organic solvent and the second organic solvent are present in a volume ratio of 80:20 to 99:1.
[9] In at least one among [1] to [8] above, the present disclosure provides a lithium secondary battery, wherein the first additive is present in an amount of 0.05 wt% to 3.0 wt% based on the total weight of the electrolyte.
[10] In at least one among [1] to [9] above, the present disclosure provides a lithium secondary battery, wherein the sulfonyl imide compound includes a compound represented by Formula 2 below.

[Formula 2]

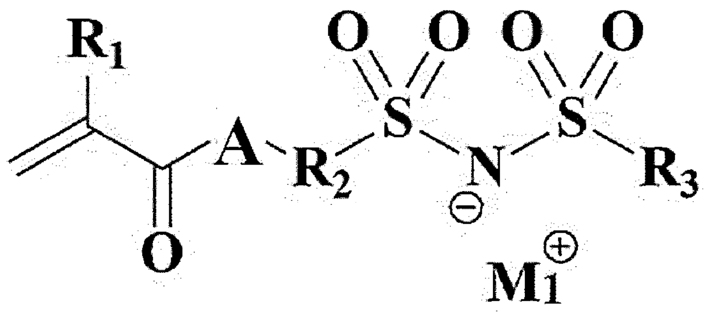

In Formula 2 above, $R_1$ is hydrogen or an alkyl group having 1 to 4 carbon atoms, $R_2$ is an arylene group having 6 to 20

carbon atoms; an aryleneoxy group having 6 to 20 carbon atoms; a heteroarylene group having 5 to 10 carbon atoms including one or more heteroatoms selected from N, S, or O; or a heteroaryleneoxy group having 5 to 10 carbon atoms including one or more heteroatoms selected from N, S, or O, $R_3$ is a fluoro group, an alkyl group having 1 to 10 carbon atoms, an alkoxy group having 1 to 10 carbon atoms, or

$$\wr\!-\!\left(O-\left(CH_2CH_2\right)_l\right)_m-H$$ ,

wherein in $R_3$, one or more hydrogens included in the alkyl group, the alkoxy group, or

$$\wr\!-\!\left(O-\left(CH_2CH_2\right)_l\right)_m-H$$

are substituted with a fluorine atom, A is an oxygen (O) atom or $-NR_4$, $R_4$ is hydrogen or an alkyl group having 1 to 4 carbon atoms, $M_1$ is any one selected from the group consisting of lithium, sodium, potassium, tetraalkylammonium having 1 to 4 carbon atoms, and tetraalkylphosphonium having 1 to 4 carbon atoms, l is an integer of 1 to 6, and m is an integer of 2 to 20.

[11] In at least one among [1] to [10] above, the present disclosure provides a lithium secondary battery, wherein in Formula 2 above, $R_1$ is hydrogen or a methyl group, $R_2$ is a phenylene group, a naphthalene group, an anthracenylene group, a biphenylene group, a phenyleneoxy group, a pyridinylene group, a thiophenylene group, a dioxolene group, or a dithiolene group, $R_3$ is a fluoro group, a methyl group, an ethyl group, a propyl group, a trifluoromethyl group, a methoxy group, an ethoxy group,

$$\wr\!-\!\left(O-\left(CH_2CH_2\right)_l\right)_m-H$$ ,

or

$$\wr\!-\!\left(O-\left(CF_2CF_2\right)_l\right)_m-F$$ ,

A is an oxygen (O) atom, -NH, or $-NCH_3$, $M_1$ is lithium, l is an integer of 1 or 2, and m is an integer of 2 to 10.

[12] In at least one among [1] to [11] above, the present disclosure provides a lithium secondary battery, wherein the first additive and the second additive are present in a weight ratio of 1:0.05 to 1:2.

[13] In at least one among [1] to [12] above, the present disclosure provides a lithium secondary battery, wherein the first additive and the second additive are present in a weight ratio of 1:0.1 to 1:2.

[14] In at least one among [1] to [12] above, the present disclosure provides a lithium secondary battery, wherein the negative electrode includes a carbon-based active material, a silicon-based active material, or a mixture of a carbon-based active material and a silicon-based active material.

## ADVANTAGEOUS EFFECTS

A lithium secondary battery according to the present disclosure may improve electrolyte impregnation properties with respect to a high-loading positive electrode by applying an organic solvent including a cyclic lactone compound, and an electrolyte including lithium nitrate ($LiNO_3$) and an ionic compound containing a sulfonyl imide ($R-S(=O)_2-N(H)-S(=O)_2-R'$) unit as additives, and at the same time, may improve charge transfer properties on the surface of the high-loading positive electrode by forming a film having low resistance on the surface of the high-loading positive electrode. Therefore, the lithium secondary battery of the present disclosure may have excellent cycle properties, and improved storage properties at high temperatures.

## BEST MDOE FOR CARRYING OUT THE INVENTION

It will be understood that terms or words used in the present specification and claims are used only to describe exemplary embodiments and shall not be construed as being limited to having meanings defined in commonly used dictionaries, but should be interpreted as having meanings and concepts consistent with the technical idea of the present

disclosure based on the principle that an inventor may appropriately define concepts of the terms to best explain the invention.

For example, in the present specification, it should be understood that the term "include," "comprise," or "have" is intended to specify the presence of stated features, numbers, steps, elements, or combinations thereof, but do not preclude the presence or addition of one or more other features, numbers, steps, elements, or combinations thereof.

In addition, in the present specification, it will be understood that in the description of "a to b carbon atoms" herein, "a" and "b" each refer to the number of carbon atoms included in a specific functional group. That is, the functional group may include "a" to "b" number of carbon atoms. For example, an "alkylene group having 1 to 5 carbon atoms" refers to an alkylene group with a carbon number of 1 to 5, that is, $-CH_2-$, $-CH_2CH_2-$, $-CH_2CH_2CH_2-$, $-CH_2(CH_2)CH-$,$-CH_2CH_2CH_2CH_2CH_2-$, $-CH(CH_2)CH_2CH_2-$, and the like.

In addition, in the present specification, the term "alkylene group" refers to a branched or unbranched aliphatic hydrocarbon group, or a functional group in a form in which one hydrogen atom is missing from each carbon atom located at both ends of the aliphatic hydrocarbon group. In an embodiment, the alkylene group may be substituted or unsubstituted. The alkylene group includes, but is not limited to, a methylene group, an ethylene group, a propylene group, an isopropylene group, a butylene group, an isobutylene group, a tert-butylene group, a pentylene group, a 3-pentylene group, and the like, each of which may be optionally substituted in another embodiment.

In addition, in the present specification, unless otherwise defined, "substituted" means that any one hydrogen bonded to carbon is substituted with another element such as fluorine.

In addition, in the present specification, "loading amount" refers to the amount of an active material per unit area obtained by measuring a positive electrode active material layer containing a lithium iron phosphorous oxide having an olivine structure formed on a current collector, and is denoted by "$mg/cm^2$." In this case, in the present specification, the "loading amount" refers to the total sum of each loading amount of both surfaces of a positive electrode.

Hereinafter, the present disclosure will be described in detail.

A lithium secondary battery according to the present disclosure includes at least one of the following disclosed configurations, and may include any combination between technically possible configurations of the following configurations.

## Lithium secondary battery

The present disclosure relates to a lithium secondary battery.

Specifically, the present disclosure provides a lithium secondary battery including a positive electrode, a negative electrode, a separator, and an electrolyte.

The positive electrode may include a lithium iron phosphorous oxide as a positive electrode active material.

The loading amount of the positive electrode may be 32 $mg/cm^2$ to 60 $mg/cm^2$.

The electrolyte may include a lithium salt, a first organic solvent, a second organic solvent, a first additive, and a second additive.

The first organic solvent may include a cyclic lactone compound.

The second organic solvent may include a carbonate-based organic solvent.

The first additive may include a lithium nitrate ($LiNO_3$).

The second additive may include a sulfonyl imide compound.

### (1) Positive electrode

The positive electrode of the present disclosure may include a lithium iron phosphorous oxide as a positive electrode active material. Specifically, the lithium iron phosphorous oxide may include a compound represented by Formula 1 below.

[Formula 1] $$Li_{1+a}Fe_xM_y(PO_{4-b})X'_b$$

In [Formula 1] above, M is any one selected from the group consisting of Al, Mg, Ni, Co, Mn, Ti, Ga, Cu, V, Nb, Zr, Ce, In, Zn, or Y, X' is one or more elements selected from the group consisting of F, S, or N, and $-0.5 \le a \le 0.5$, $0 < x \le 1$, $0 \le y \le 1$, and $0 \le b \le 0.3$.

The lithium iron phosphorous oxide represented by Formula 1 above may include a lithium iron phosphate ($LiFePO_4$, LFP) or a lithium manganese iron phosphate ($LiFeMnPO_4$, LFMP) as a representative example thereof.

The lithium iron phosphorous oxide represented by Formula 1 above may use a nanometer-sized primary particle for high input and output of lithium ions, or may use a secondary particle made by assembling these primary particles into an aggregate of the primary particles. For example, if a primary particle is used as the lithium iron phosphorous oxide having an olivine structure, the particle size may be 50 nm to 2000 nm, more specifically 200 nm to 1100 nm. In addition, if

these primary particles are assembled to be made into a secondary particle, which is an aggregate of the primary particles, the average particle diameter ($D_{50}$) of the secondary particles may be 0.5 $\mu$m to 30 $\mu$m.

The lithium iron phosphorous oxide represented by Formula 1 above may secure structural stability and thermal stability in spite of a volume change due to charge/discharge since phosphorus and oxygen have a strong covalent bond within a tetrahedral structure of $PO_4$. In addition, the surface of the lithium iron phosphorous oxide represented by Formula 1 above may be coated with an amorphous layer of carbon or a metal oxide. In this case, since the amorphous layer of carbon or a metal oxide coated on the surface is not crystalline, lithium ions are intercalated and de-intercalated through the lithium iron phosphorous oxide in a core portion through the amorphous layer of a shell. The amorphous layer of the carbon or a metal oxide coated on the surface has excellent electronic conductivity, while being able to transfer lithium ions, and thus, may also serve as a current path to the core of the lithium iron phosphorous oxide, which is an active material, thereby enabling charge and discharge at a high rate. In addition, if the surface of the lithium iron phosphorous oxide is coated with the amorphous layer of carbon or a metal oxide, an unnecessary reaction between a core material and an electrolyte may be controlled, thereby further increasing safety.

Meanwhile, in the present disclosure, in order to design an electrode to have a high capacity, the loading amount of the positive electrode including the lithium iron phosphorous oxide represented by Formula 1 above may be 32 mg/cm$^2$ or greater (single-side areal loading: 16 mg/cm$^2$ or greater), specifically 32 mg/cm$^2$ to 60 mg/cm$^2$, and more preferably 40 mg/cm$^2$ to 60 mg/cm$^2$. If the loading amount of the positive electrode satisfies the above-described range, high-capacity properties may be implemented.

The positive electrode may include a positive electrode current collector, and a positive electrode mixture layer disposed on at least one surface of the positive electrode current collector. In this case, the positive electrode mixture layer may include the above-described lithium iron phosphorous oxide as a positive electrode active material.

The positive electrode current collector may typically have a thickness of 3 $\mu$m to 500 $\mu$m.

The positive electrode current collector may have microscopic irregularities formed on the surface thereof to improve the bonding force of the positive electrode active material. For example, the positive electrode current collector may be used in various forms such as a film, a sheet, a foil, a net, a porous body, a foam, and a non-woven body.

The positive electrode mixture layer may be disposed on at least one surface of the positive electrode current collector, and specifically, may be disposed on one surface or both surfaces of the positive electrode current collector.

In addition, the lithium iron phosphorous oxide represented by Formula 1 above may be present in an amount of 80 wt% to 99 wt% in the positive electrode mixture layer in consideration of exerting a sufficient capacity.

Meanwhile, the positive electrode mixture layer may further include a binder and/or a conductive material together with the positive electrode active material described above.

The binder serves to improve the bonding between positive electrode active material particles and the adhesive force between the positive electrode active material and the current collector. Examples of the binder may include a fluorine resin-based binder including polyvinylidene fluoride (PVDF); a rubber-based binder including styrene-butadiene rubber (SBR), acrylonitrile-butadiene rubber, or styrene-isoprene rubber; a cellulose-based binder including carboxyl methyl cellulose (CMC), starch, hydroxypropyl cellulose, or regenerated cellulose; a polyvinyl alcohol-based binder including polyvinyl alcohol; a polyolefin-based binder including polyethylene or polypropylene; a polyimidazole-based binder, a polyester-based binder; or a silane-based binder, or any one thereof may be used alone, or a mixture of two or more thereof may be used.

The binder may be present in an amount of 0.1 wt% to 15 wt%, preferably 0.1 wt% to 10 wt%, in the positive electrode mixture layer.

Next, the conductive material is used to impart conductivity to an electrode, and any conductive material may be used without particular limitation as long as it has electron conductivity without causing a chemical change in a battery to be constituted. Specifically, as the conductive material, carbon powder such as carbon black, acetylene black, Ketjen black, channel black, furnace black, lamp black, or thermal black; graphite powder such as natural graphite, artificial graphite, or graphite with a highly developed crystal structure; conductive fiber such as carbon fiber or metal fiber; conductive powder such as fluorocarbon powder, aluminum powder, or nickel powder; conductive whisker such as zinc oxide or potassium titanate; a conductive metal oxide such as titanium oxide; a polyphenylene derivative, or the like may be used.

The conductive material may be added in an amount of 1 wt% to 30 wt% in the positive electrode mixture layer.

The positive electrode may be manufactured by coating the positive electrode current collector with a positive electrode slurry including a positive electrode active material, and optionally, a binder, a conductive material, and a solvent for forming a positive electrode slurry, followed by drying and roll-pressing the positive electrode slurry. Alternatively, the positive electrode may be manufactured by preparing a film by mixing a positive electrode active material, and optionally, a binder, a conductive material, or the like, and then laminating the film on a positive electrode current collector.

The solvent for forming a positive electrode slurry may include, for example, at least one selected from the group consisting of distilled water, N-methyl pyrrolidone, ethanol, methanol, or isopropyl alcohol, preferably N-methyl pyrrolidone, in terms of facilitating the dispersion of the positive electrode active material, the binder, and/or the conductive material.

**(2) Negative electrode**

Next, the negative electrode will be described.

The negative electrode may include a negative electrode active material.

As the negative electrode active material, a carbon-based active material, a silicon-based active material, or a mixture of a carbon-based active material or a silicon-based active material may be used.

As the carbon-based active material, various carbon-based active materials used in the art, for example, a graphite-based material such as natural graphite, artificial graphite, or Kish graphite; pyrolytic carbon, mesophase pitch-based carbon fiber, meso-carbon microbeads, mesophase pitches, and high-temperature fired carbon such as petroleum or coal tar pitch derived cokes, soft carbon, hard carbon, or the like may be used. The shape of the carbon-based active material is not particularly limited, and materials in various shapes, such as an irregular shape, a planar shape, a flaky shape, a spherical shape, and a fibrous shape, may be used.

Specifically, the carbon-based active material may use either of natural graphite or artificial graphite, and may also use natural graphite and artificial graphite together in order to increase adhesive force with a current collector to suppress de-intercalation of an active material.

In addition, the silicon-based active material may include, for example, one or more selected from the group consisting of metal silicon (Si), silicon oxide ($SiO_x$, wherein $0<x<2$), silicon carbide (SiC), or an Si-Y alloy (the Y is an element selected from the group consisting of an alkali metal, an alkaline earth metal, a Group 13 element, a Group 14 element, a transition metal, a rare earth element, or a combination thereof, and is not Si). The element Y may be selected from the group consisting of Mg, Ca, Sr, Ba, Ra, Sc, Y, Ti, Zr, Hf, Rf, V, Nb, Ta, dubnium (Db), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The average particle diameter ($D_{50}$) of the silicon-based active material may be 1 μm to 30 μm, preferably 2 μm to 15 μm, in terms of ensuring structural stability during charge/discharge and decreasing side reactions with an electrolyte solution.

In addition, the negative electrode of the present disclosure may include at least one selected from the carbon-based active material or the silicon-based active material.

Specifically, the negative electrode of the present disclosure may include the carbon-based active material and the silicon-based active material.

In this case, the weight ratio between the silicon-based active material and the carbon-based active material may be 1:99 to 30:70, specifically 3:97 to 15:85. If the mixing ratio between the silicon-based active material and the carbon-based active material satisfies the above-described range, the volume expansion of the silicon-based active material is suppressed while improving capacity properties, so that excellent cycle performance may be secured.

The negative electrode may include a negative electrode current collector, and a negative electrode mixture layer disposed on at least one surface of the negative electrode current collector. In this case, the negative electrode active material may be included in the negative electrode mixture layer.

The negative electrode current collector is not particularly limited as long as it has conductivity without causing a chemical change in the battery. Specifically, as the negative electrode current collector, copper, stainless steel, aluminum, nickel, titanium, fired carbon, copper or stainless steel that is surface-treated with one of carbon, nickel, titanium, silver, or the like, an aluminum-cadmium alloy, or the like may be used.

The negative electrode current collector may typically have a thickness of 3 μm to 500 μm.

The negative electrode current collector may have microscopic irregularities formed on the surface thereof to improve the bonding force of the negative electrode active material. For example, the negative electrode current collector may be used in various forms such as a film, a sheet, a foil, a net, a porous body, a foam, or a non-woven body.

The negative electrode mixture layer is disposed on at least one surface of the negative electrode current collector. Specifically, the negative electrode mixture layer may be disposed on one surface or both surfaces of the negative electrode current collector.

In terms of minimizing the influence of volume expansion/contraction on the battery as well as allowing the secondary battery to exhibit a sufficient capacity, the negative electrode active material may be present in an amount of 60 wt% to 99 wt% in the negative electrode mixture layer.

The negative electrode mixture layer may further include a conductive material and/or a binder together with the negative electrode active material.

The conductive material is a component for further improving the conductivity of the negative electrode active material, and is not particularly limited as long as it has conductivity without causing a chemical change in the battery, and for example, carbon powder such as carbon black, acetylene black, Ketjen black, channel black, furnace black, lamp black, or thermal black; graphite powder such as natural graphite, artificial graphite, or graphite with a highly developed crystal structure; conductive fiber such as carbon fiber or metal fiber; conductive powder such as fluorocarbon powder, aluminum powder, or nickel powder; conductive whisker such as zinc oxide or potassium titanate; conductive metal oxide such as

titanium oxide; a conductive material such as a polyphenylene derivative, and the like may be used.

The conductive material may be present in an amount of 10 wt% or less, preferably 5 wt%, in the negative electrode mixture layer.

The binder is a component for assisting in bonding between a conductive material, an active material, and a current collector, and may typically be a fluorine resin-based binder such as polyvinylidene fluoride (PVDF); a rubber-based binder including styrene-butadiene rubber (SBR), acrylonitrile-butadiene rubber, or styrene-isoprene rubber; a cellulose-based binder including carboxyl methyl cellulose (CMC), starch, hydroxypropyl cellulose, or regenerated cellulose; a polyvinyl alcohol-based binder including polyvinyl alcohol; a polyolefin-based binder including polyethylene, or polypropylene; a polyimidazole-based binder; a polyester-based binder; a silane-based binder, or the like.

The binder may be present in an amount of 0.1 wt% to 15 wt%, preferably 0.1 wt% to 10 wt%, in the negative electrode mixture layer.

The negative electrode may be manufactured by coating a negative electrode slurry including a negative electrode active material, and optionally, a binder, a conductive material, and a solvent for forming a negative electrode slurry on the negative electrode current collector, followed by drying and roll-pressing the negative electrode slurry. Alternatively, the negative electrode may be manufactured by preparing a film by mixing a negative electrode active material, and optionally, a binder, a conductive material, and the like, and then laminating the film on a negative electrode current collector.

The solvent for forming a negative electrode slurry may include, for example, at least one selected from the group consisting of distilled water, N-methyl pyrrolidone, ethanol, methanol, or isopropyl alcohol, preferably distilled water, in terms of facilitating the dispersion of the negative electrode active material, the binder, and/or the conductive material.

**(3) Separator**

The separator is to separate the negative electrode and the positive electrode and to provide a transfer path for lithium ions, and any separator may be used without particular limitation as long as it is a separator commonly used in a lithium secondary battery, and particularly, a separator having low resistance to ion transfer in a non-aqueous electrolyte, and having excellent non-aqueous electrolyte moisture-retention is preferable.

Specifically, as the separator, a porous polymer film, for example, a porous polymer film manufactured using a polyolefin-based polymer such as an ethylene homopolymer, a propylene homopolymer, an ethylene/butene copolymer, an ethylene/hexene copolymer, or an ethylene/methacrylate copolymer, or a stacked structure having two or more layers thereof may be used. In addition, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength, and may optionally be used in a single-layered or multi-layered structure.

**(4) Electrolyte**

Next, the electrolyte of the present disclosure may include a lithium salt, a first organic solvent, a second organic solvent, a first additive, and a second additive, and specific examples of each component are as described below.

**(4-1) Lithium salt**

First, any lithium salt typically used in an electrolyte solution for a lithium secondary battery may be used without limitation as the lithium salt, and for example, the lithium salt may include $Li^+$ as a cation, and may include any one selected from the group consisting of $F^-$, $Cl^-$, $Br^-$, $I^-$, $N(CN)_2^-$, $BF_4^-$, $ClO_4^-$, $B_{10}Cl_{10}^-$, $AlCl_4^-$, $AlO_2^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$, or $SCN^-$ as an anion.

Specifically, the lithium salt may include a single material or a mixture of two or more selected from the group consisting of LiCl, LiBr, LiI, $LiBF_4$, $LiClO_4$, $LiB_{10}Cl_{10}$, $LiAlCl_4$, $LiAlO_2$, $LiPF_6$, $LiCF_3SO_3$, $LiCH_3CO_2$, $LiCF_3CO_2$, $LiAsF_6$, $LiSbF_6$, $LiCH_3SO_3$, $LiN(SO_2F)_2$ (Lithium bis(fluorosulfonyl)imide, LiFSI), $LiN(SO_2CF_2CF_3)_2$ (lithium bis(pentafluoroethanesulfonyl)imide, LiBETI), or $LiN(SO_2CF_3)_2$ (lithium bis(trifluoromethane sulfonyl)imide, LiTFSI), and specifically, may be any one selected from the group consisting of $LiBF_4$, $LiPF_6$, $LiN(SO_2F)_2$ (Lithium bis (fluorosulfonyl) imide, LiFSI), $LiN(SO_2CF_2CF_3)_2$ (lithium bis(pentafluoroethanesulfonyl)imide, LiBETI), or $LiN(SO_2CF_3)_2$ (lithium bis (trifluoromethane sulfonyl) imide, LiTFSI). In addition to the above examples, any lithium salt commonly used in an electrolyte solution of a lithium secondary battery may be used without limitation.

Although it may be appropriately changed within a typical range in which a lithium salt may be used, in order to obtain an optimum effect of forming an anti-corrosive film on the surface of an electrode, the lithium salt may be included at

a concentration of 0.8 M to 3.0 M, specifically, at a concentration of 1.0 M to 2.0 M, preferably 1.0 M to 1.8 M, in the electrolyte solution.

If the concentration of the lithium salt is in the above-described range, the viscosity of the electrolyte may be controlled to implement optimal impregnation properties, and transfer properties of lithium ions may be improved to obtain an effect of improving capacity properties and cycle properties of the lithium secondary battery.

### (4-2) First organic solvent

Next, the first organic solvent will be described.

The first organic solvent may include a cyclic lactone compound.

The cyclic lactone compound is a compound having a high dielectric constant and high ion conductivity, and may improve a charge transfer degradation phenomenon caused when a high-loading electrode is driven.

The cyclic lactone compound may include gamma-butyrolactone.

The first organic solvent may be present in an amount of 39 wt% to 80 wt%, specifically 48 wt% to 80 wt%, and more preferably 52 wt% to 70 wt%, based on the total weight of the electrolyte.

If the content of the first organic solvent of the present disclosure satisfies the above-described range, lithium ion transfer properties may be improved, thereby achieving a battery resistance reduction effect.

### (4-3) Second organic solvent

Next, the second organic solvent will be described.

The second organic solvent may include a carbonate-based organic solvent to minimize decomposition by an oxidation reaction and the like during a charge/discharge process of a secondary battery, and to exhibit desired properties together with an additive.

Specifically, the carbonate-based organic solvent may preferably include any one selected from the group consisting of a cyclic carbonate-based organic solvent having high ion conductivity and a high dielectric constant, and a linear carbonate-based organic solvent having low viscosity and a low dielectric constant, and specifically, may include a cyclic carbonate-based organic solvent.

The cyclic carbonate-based organic solvent may specifically be any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, or fluoroethylene carbonate (FEC), or two or more organic solvents thereof, and among these, ethylene carbonate capable of maintaining stable SEI film passivation capability is preferable.

In addition, the linear carbonate-based organic solvent may be any one selected from the group consisting of dimethyl carbonate (DMC), diethyl carbonate (DEC), dipropyl carbonate, ethylmethyl carbonate (EMC), methylpropyl carbonate, or ethylpropyl carbonate, or an organic solvent of two or more thereof, and among these linear carbonate-based organic solvents, may be dimethyl carbonate (DMC) or ethylmethyl carbonate (EMC) having a small molecular size or low viscosity properties.

If the cyclic carbonate-based organic solvent and the linear carbonate-based organic solvent are mixed and used as the second organic solvent, in order to secure low viscosity properties, the cyclic carbonate-based organic solvent and the linear carbonate-based organic solvent may be mixed in a volume ratio of about 1:99 to 50:50 and used, or may be mixed in a volume ratio of 20:80 to 40:60 and used.

Meanwhile, in the present disclosure, the first organic solvent and the second organic solvent may be present in a volume ratio of 50:50 to 99:1, specifically 70:30 to 99:1, and more specifically 70:30 to 90:10.

If the mixing ratio of the first organic solvent and the second organic solvent satisfies the above-described range, a high ion transfer properties effect may be achieved, and battery performance having low resistance properties may be secured. That is, if the volume ratio of the first organic solvent is 50 or greater, an ion transfer properties effect may be secured, and if the volume ration is 99 or less, battery lifespan properties may be improved by forming a stable film.

Meanwhile, the electrolyte of the present disclosure may further include a third organic solvent if necessary.

The third organic solvent may include a linear ester-based organic solvent.

As representative examples thereof, the linear ester-based organic solvent may include at least one organic solvent selected from the group consisting of methyl acetate, ethyl acetate, propyl acetate, methyl propionate, ethyl propionate, propyl propionate, or butyl propionate, and specifically, may include at least one of ethyl propionate or propyl propionate.

### (4-4) First additive

Next, the first additive will be described.

The first additive may include a lithium nitrate ($LiNO_3$).

During an activation step, the lithium nitrate ($LiNO_3$) included in the first additive may form an inorganic film including lithium-nitrogen and lithium-oxygen bonds on the surface of the negative electrode. Since the inorganic film increases surface energy and acts as an ion carrier capable of uniform delivery of lithium ions, electrode impregnation properties of the electrolyte may be improved, and a more effective charge transfer reaction may be induced.

In addition, the lithium nitrate ($LiNO_3$) included in the first additive may form a coordinate bond with a transition metal eluted from the positive electrode under a high-temperature environment, or may form a coordinate bond with a Lewis acid or the like generated by a decomposition product of the lithium salt, thereby preventing transition metal ions from being electrodeposited on the surface of the negative electrode, resulting in preventing reversible lithium loss, and thus, is capable of reducing deterioration in cycle properties.

Meanwhile, the first additive may be present in a specific content in the electrolyte. Specifically, the first additive may be present in an amount of 0.05 wt% to 3.0 wt%, specifically 0.05 wt% to 2.0 wt%, more specifically 0.1 wt% to 2.0 wt%, and preferably 0.1 wt% to 1.5 wt%, based on the total weight of the electrolyte.

If the content of the first additive of the present disclosure satisfies the above-described range, an inorganic film including lithium-nitrogen and lithium-oxygen bonds is uniformly formed on the surface of the negative electrode, and thus, may act as an effective ion carrier instead of acting as a resistor. That is, if the first additive is present in an amount of 0.05 wt% or greater, it is possible to prevent degradation in battery performance by suppressing an increase in battery resistance, and if present in an amount of 3.0 wt% or less, it is possible to prevent the generation of an unnecessary activation gas or the like by suppressing a side reaction between an electrolyte and an electrode by the formation of a robust film, so that it is possible to prevent degradation in high-temperature cycle and high-temperature storage properties.

Meanwhile, it is preferable that the content of the first additive in the electrolyte and the loading amount of the positive electrode satisfy Relation Equation 1 below.

[Relation Equation 1]

$$0.0001 \le \frac{0.02 \times (A \times B)}{(C \times D)} \le 0.05C$$

In Relation Equation 1 above, A is the total injection amount (g) of an electrolyte injected into a lithium secondary battery, B is the content (wt%) of lithium nitrate ($LiNO_3$) contained in the injected electrolyte, C is the loading amount (g/$cm^2$) of a positive electrode, and D denotes the total area ($cm^2$) of the surface of a positive electrode current collector.

If the content of the first additive in the electrolyte of the present disclosure satisfies the above Relation Equation, it is possible to increase electrolyte impregnation properties with respect to the negative electrode, and to form an effective inorganic film capable of improving ion transfer properties, so that it is possible to secure excellent battery performance.

**(4-5) Second additive**

Next, the second additive will be described.

In the present disclosure, a sulfonyl imide compound may be included as the second additive.

The sulfonyl imide compound may include a compound represented by Formula 2 below.

[Formula 2]

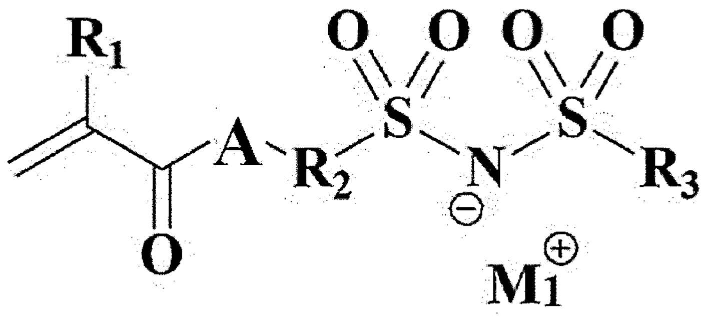

In Formula 2 above, $R_1$ is hydrogen or an alkyl group having 1 to 4 carbon atoms, $R_2$ is an arylene group having 6

to 20 carbon atoms; an aryleneoxy group having 6 to 20 carbon atoms; a heteroarylene group having 5 to 10 carbon atoms including one or more heteroatoms selected from N, S, or O; or a heteroaryleneoxy group having 5 to 10 carbon atoms including one or more heteroatoms selected from N, S, or O, $R_3$ is a fluoro group, an alkyl group having 1 to 10 carbon atoms, an alkoxy group having 1 to 10 carbon atoms, or

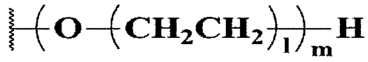
,

wherein in $R_3$, one or more hydrogens included in the alkyl group, the alkoxy group, or

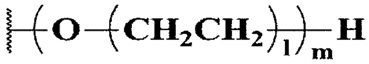

are substituted with a fluorine atom, A is an oxygen (O) atom or $-NR_4$, $R_4$ is hydrogen or an alkyl group having 1 to 4 carbon atoms, $M_1$ is any one selected from the group consisting of lithium, sodium, potassium, tetraalkylammonium having 1 to 4 carbon atoms, or tetraalkylphosphonium having 1 to 4 carbon atoms, l is an integer of 1 to 6, and m is an integer of 2 to 20.

Specifically, the sulfonyl imide compound represented by Formula 2 above, which is included as the second additive, may be an ionic compound in which a vinyl group is bonded to one side of a sulfonyl imide ($-S(=O)_2-N^--S(=O)_2-$) unit through functional groups (A and $R_1$) which extend conjugation of a sulfonyl imide group. The ionic compound includes a negative charge in the molecular structure thereof, and thus, easily moves to the positive electrode and is oxidized and decomposed upon activation, so that it is possible to uniformly form an organic film and/or a robust inorganic film including a lithium-nitrogen/oxygen/sulfur bond on the surface of the positive electrode.

As described above, the compound represented by Formula 2 has the property of being electrochemically oxidized at a potential near 4.0 V compared to a lithium ion ($Li^+$), and thus, if used together as an electrolyte additive in a secondary battery to which a lithium iron phosphorous oxide electrode is applied, the compound may be reduced earlier than the organic solvent, thereby forming a robust film on the surface of the positive electrode at the beginning of activation, and as a result, may block additional electrolyte oxidation decomposition on the surface of the positive electrode during repeated cycle driving, thereby suppressing an increase in resistance, so that it is possible to reduce deterioration in overall performance of a lithium secondary battery.

Meanwhile, in Formula 2 above, $R_1$ may be hydrogen or a methyl group, $R_2$ may be a phenylene group, a naphthalene group, an anthracenylene group, a biphenylene group, a phenyleneoxy group, a pyridinylene group, a thiophenylene group, a dioxolene group, or a dithiolene group, $R_3$ may be a fluoro group, a methyl group, an ethyl group, a propyl group, a trifluoromethyl group, a methoxy group, an ethoxy group,

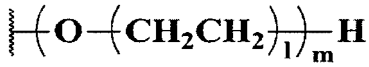
,

or

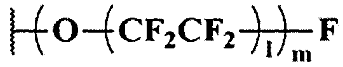
,

A may be an oxygen (O) atom, -NH, or $-NCH_3$, $M_1$ may be lithium, l may be an integer of 1 or 2, and m may be an integer of 2 to 10.

More specifically, the compound represented by Formula 2 above may be any one selected from the group consisting of compounds represented by Formulas 2-1 to 2-48 below, and specifically, compounds represented by Formulas 2-1 to 2-6, 2-13 to 2-18, 2-25 to 2-30, or 2-37 to 2-42 are preferred. That is, in the case of the compounds represented by Formulas 2-1 to 2-6, 2-13 to 2-18, 2-25 to 2-30, or 2-37 to 2-42 in which oxygen/nitrogen elements and a sulfur element are connected through a phenyl group, oxidation decomposition is more facilitated at low voltages, which may allow a more robust film to be formed, than in the cases of the compounds represented by Formulas 2-7, 2-8, 2-19 to 2-21, 2-31 and 2-32, and 2-43 and 2-44 in which oxygen/nitrogen elements and a sulfur element are connected through a phenol group, or the compounds represented by Formulas 2-9 to 2-12, 2-22 to 2-24, 2-33 to 2-36, and 2-45 to 2-48 in which oxygen/nitrogen elements and a sulfur element are connected through a pyridine group.

[Formula 2-1]

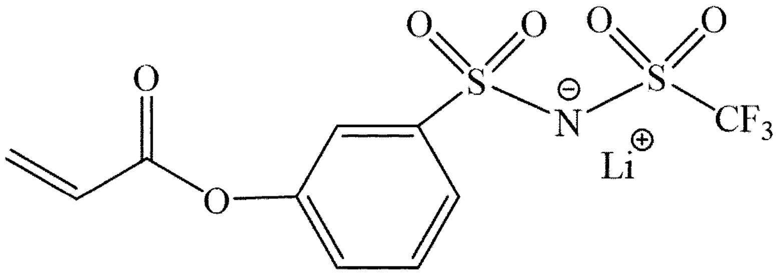

[Formula 2-2]

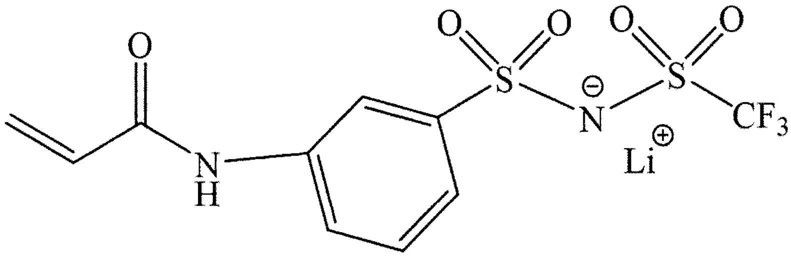

[Formula 2-3]

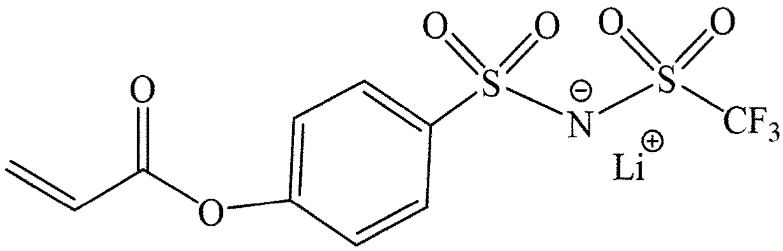

[Formula 2-4]

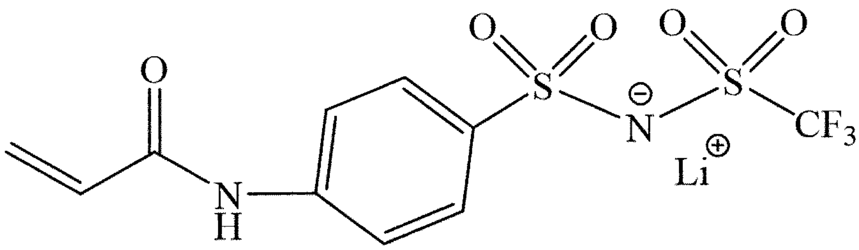

[Formula 2-5]

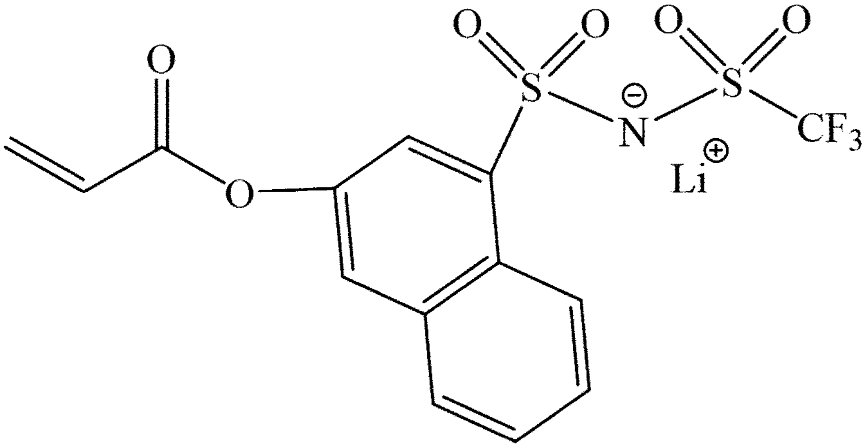

[Formula 2-6]

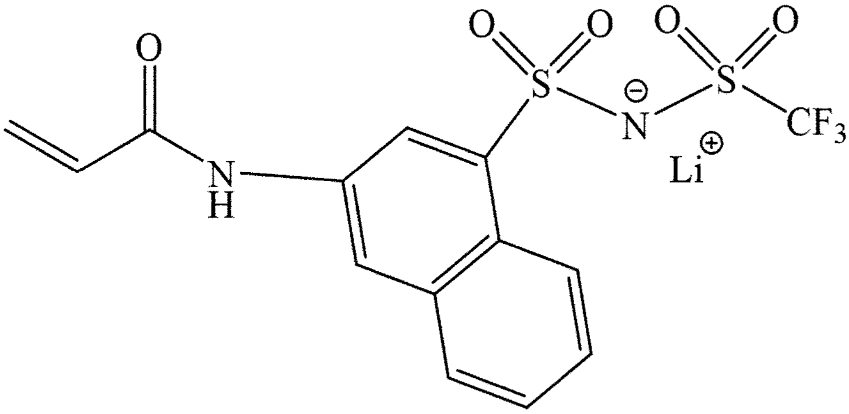

[Formula 2-7]

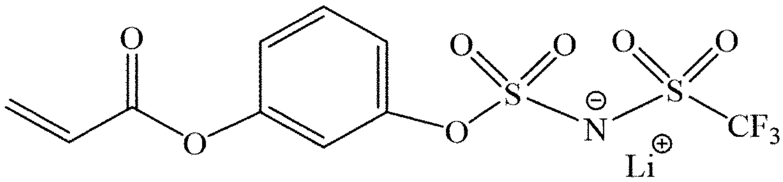

[Formula 2-8]

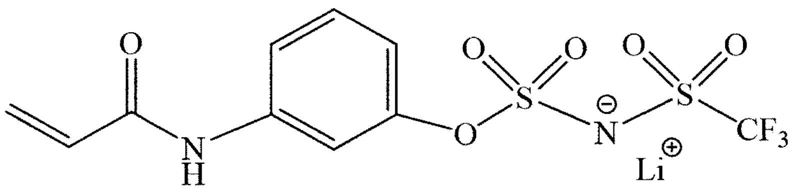

[Formula 2-9]

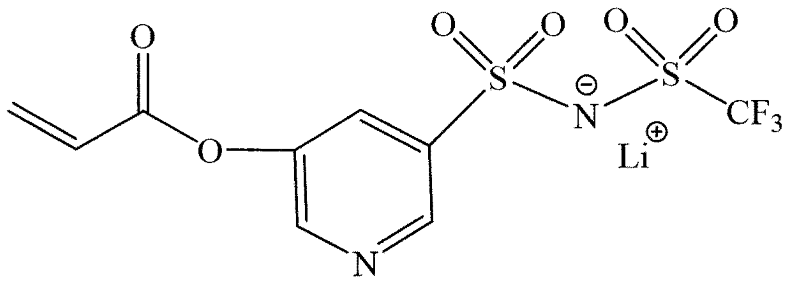

[Formula 2-10]

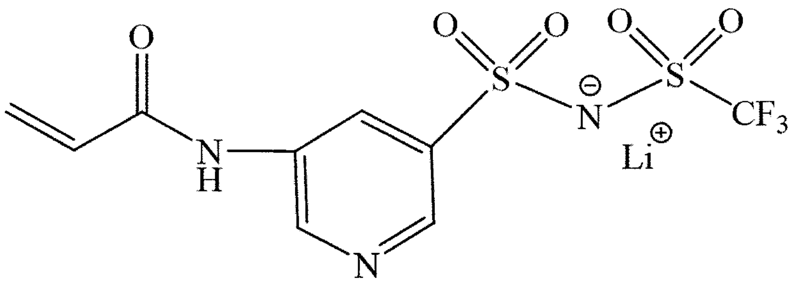

[Formula 2-11]

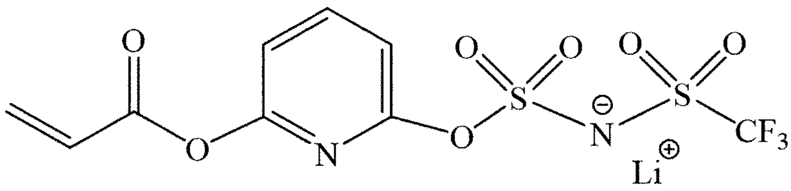

[Formula 2-12]

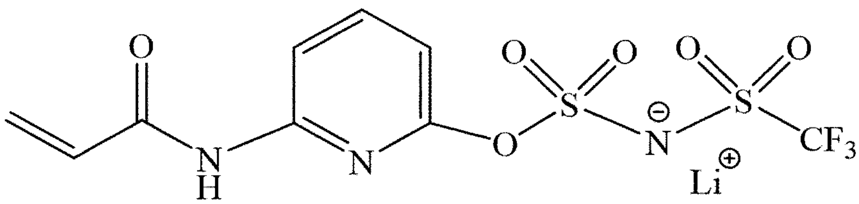

[Formula 2-13]

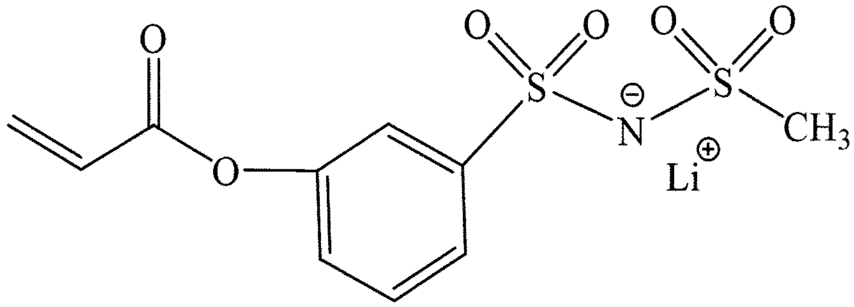

[Formula 2-14]

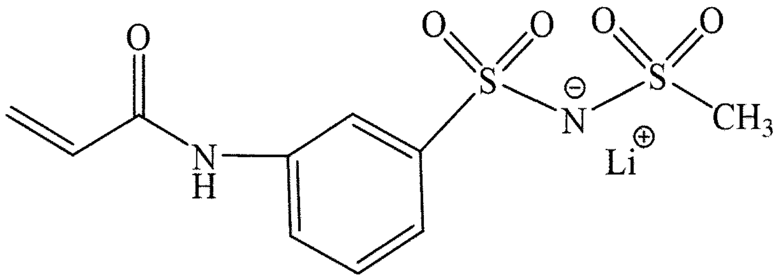

[Formula 2-15]

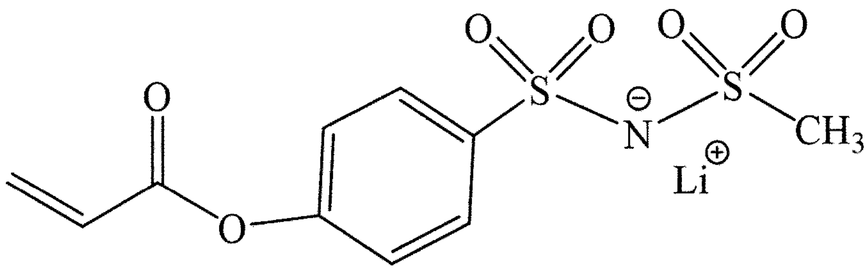

[Formula 2-16]

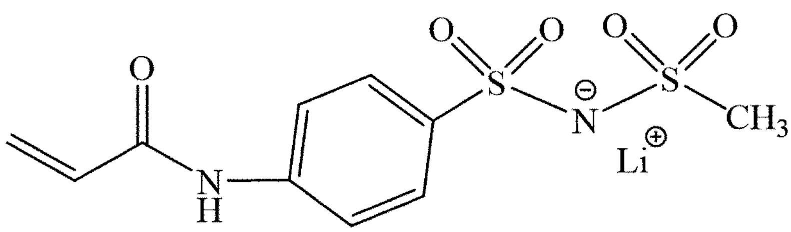

[Formula 2-17]

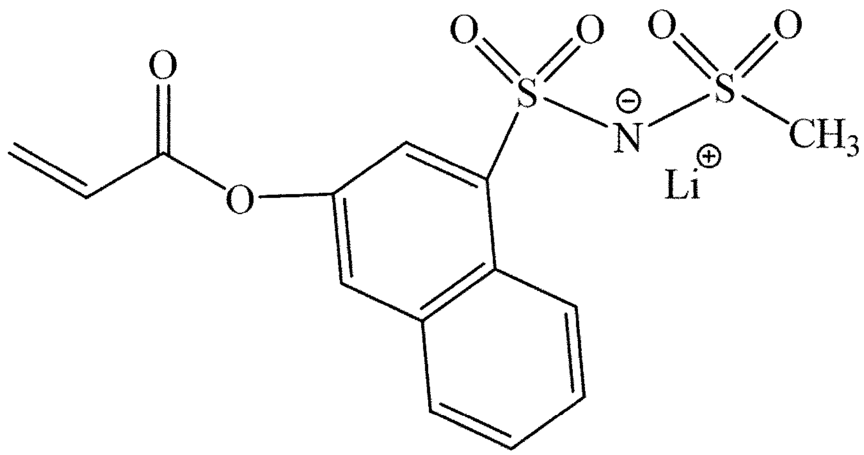

[Formula 2-18]

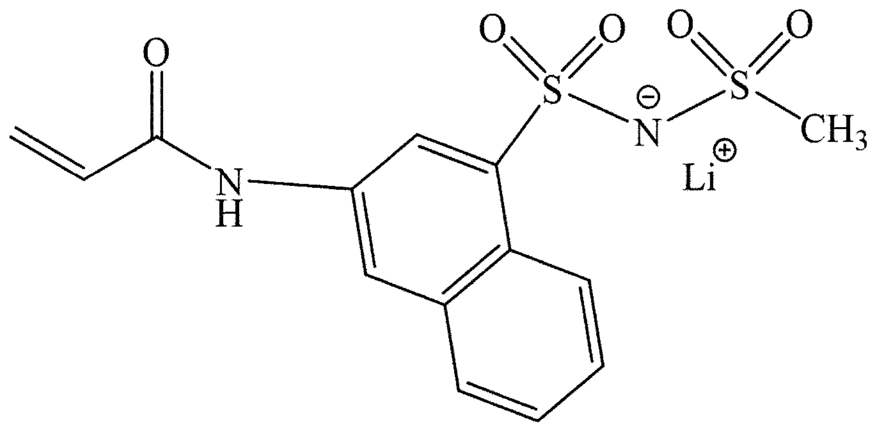

[Formula 2-19]

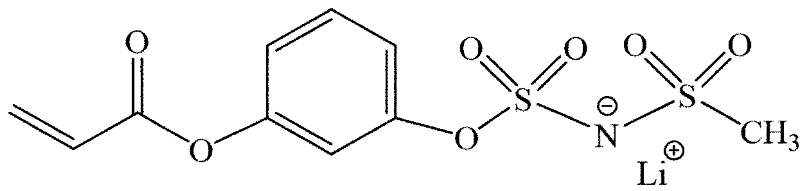

[Formula 2-20]

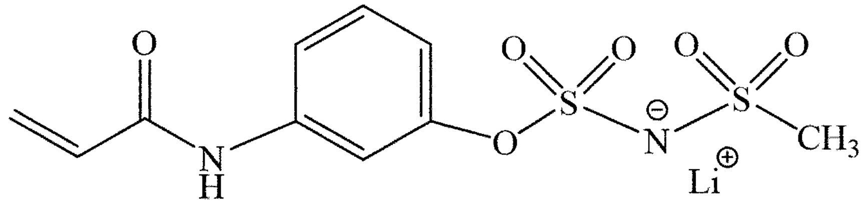

[Formula 2-21]

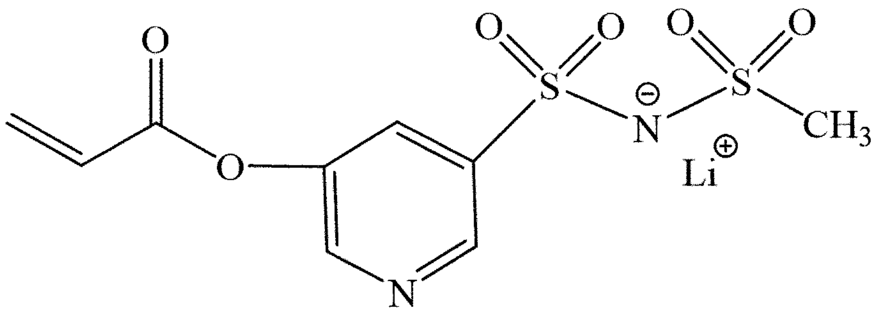

[Formula 2-22]

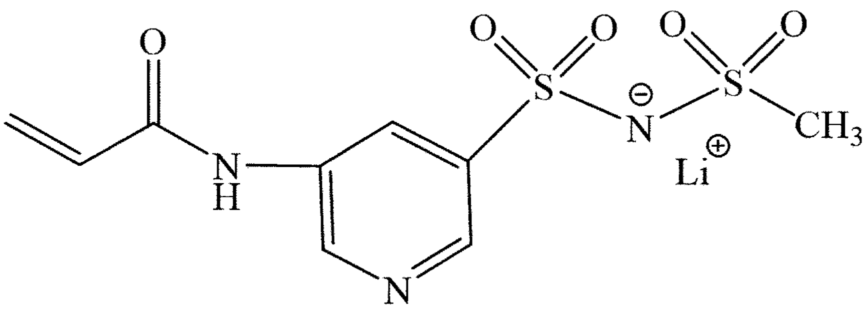

[Formula 2-23]

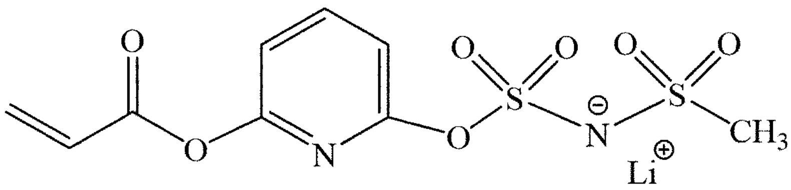

[Formula 2-24]

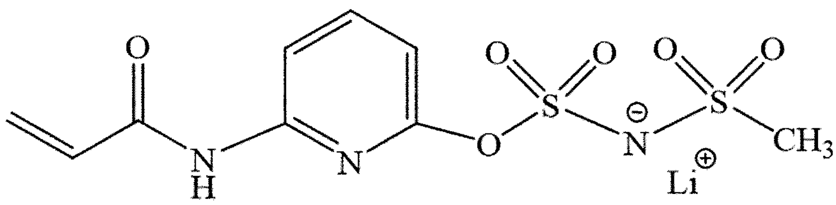

[Formula 2-25]

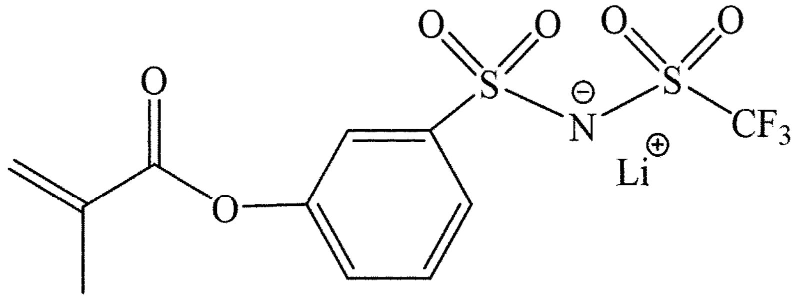

[Formula 2-26]

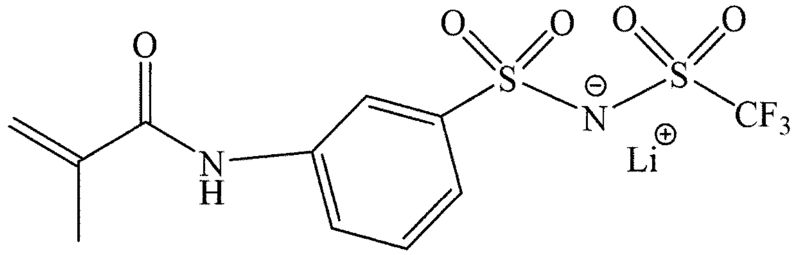

[Formula 2-27]

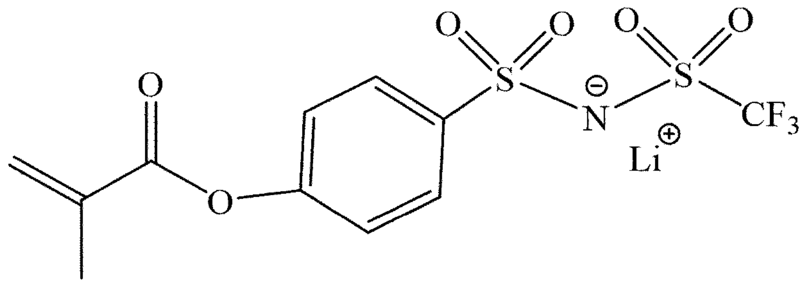

[Formula 2-28]

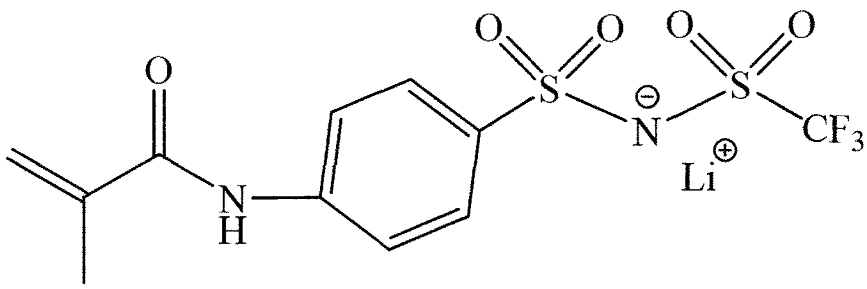

[Formula 2-29]

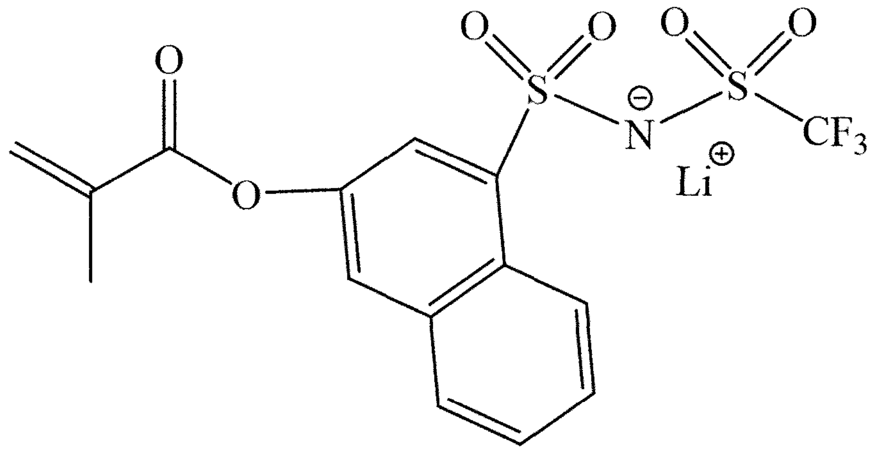

[Formula 2-30]

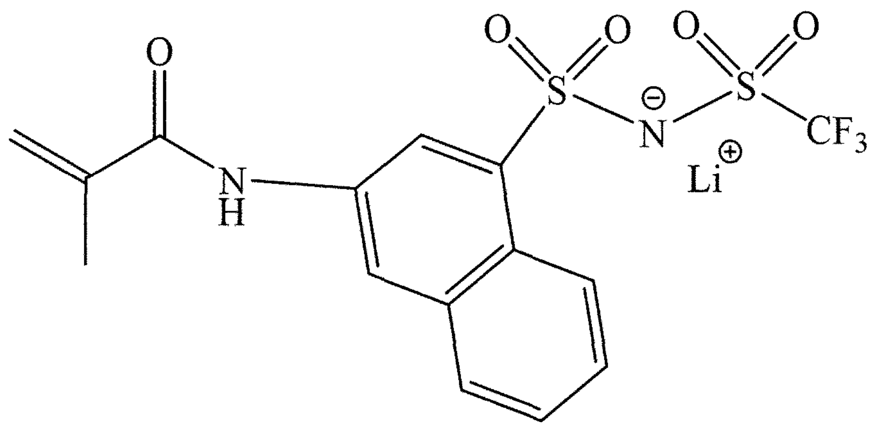

[Formula 2-31]

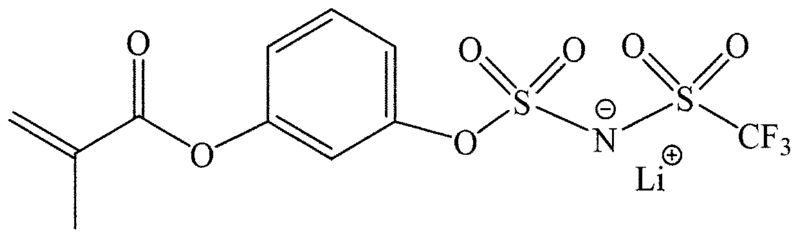

[Formula 2-32]

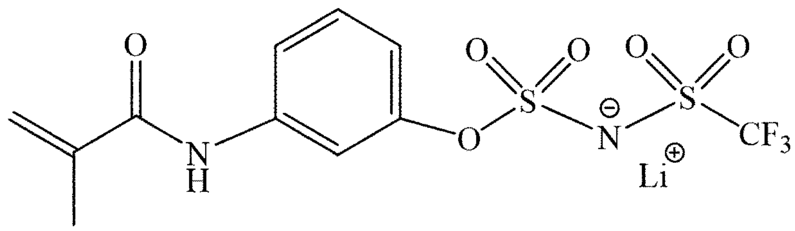

[Formula 2-33]

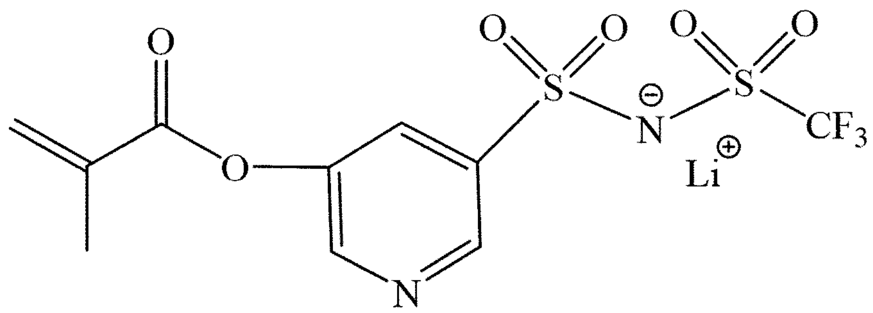

[Formula 2-34]

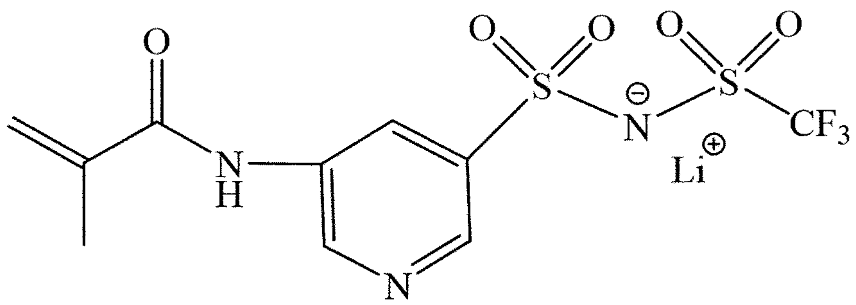

[Formula 2-35]

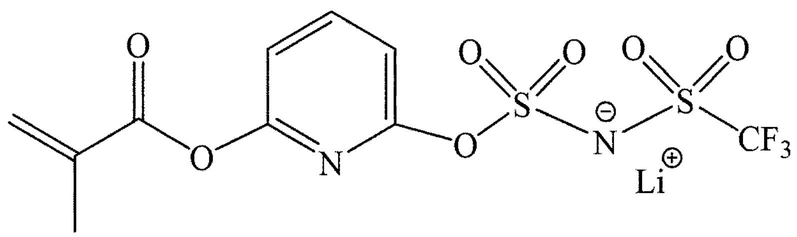

[Formula 2-36]

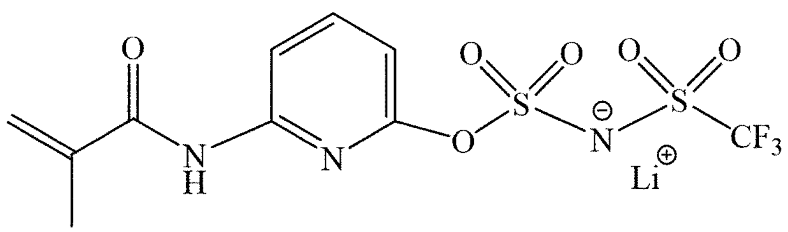

[Formula 2-37]

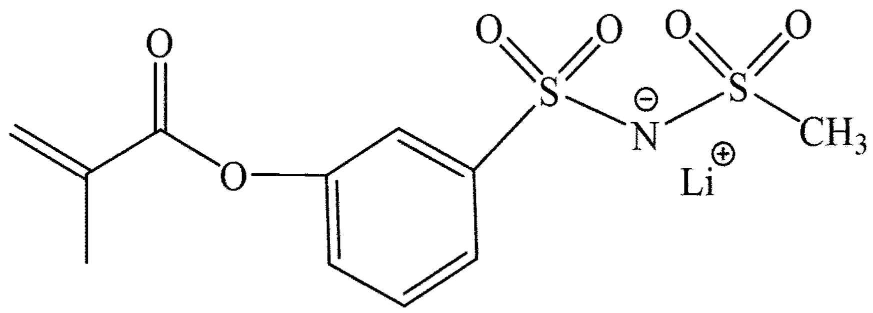

[Formula 2-38]

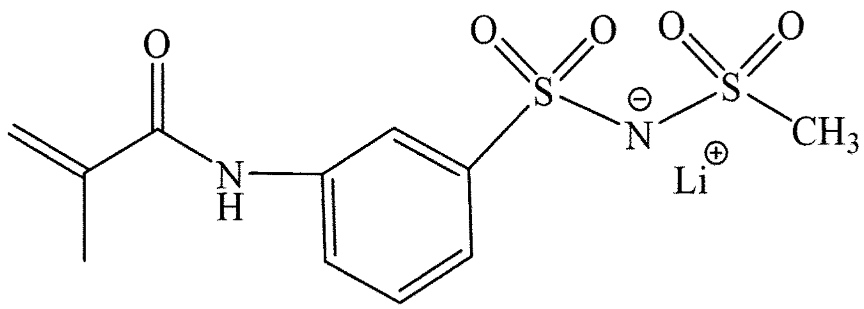

[Formula 2-39]

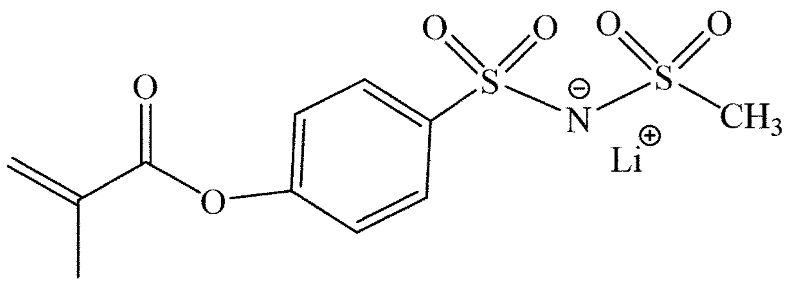

[Formula 2-40]

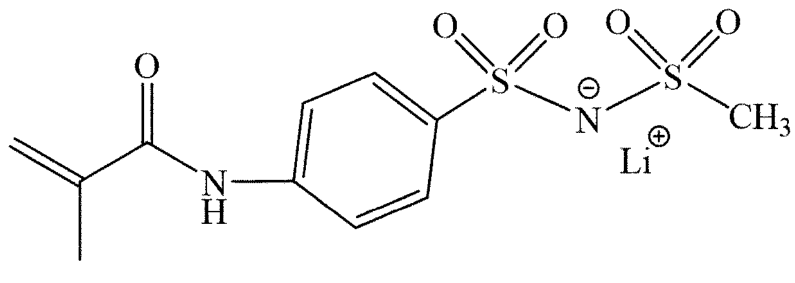

[Formula 2-41]

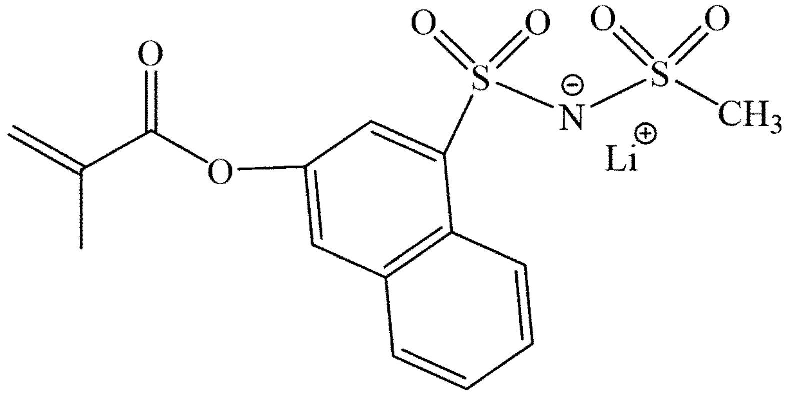

[Formula 2-42]

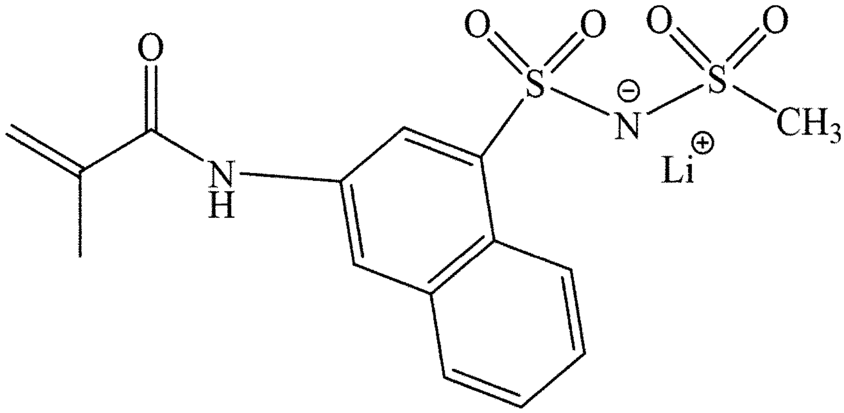

[Formula 2-43]

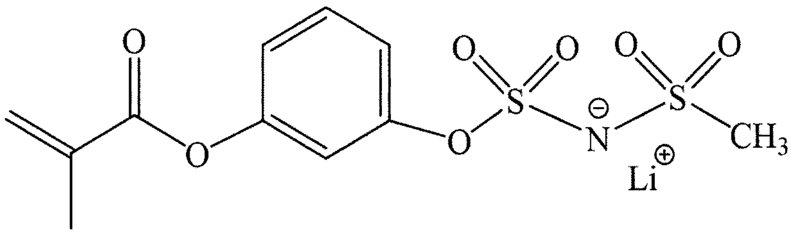

[Formula 2-44]

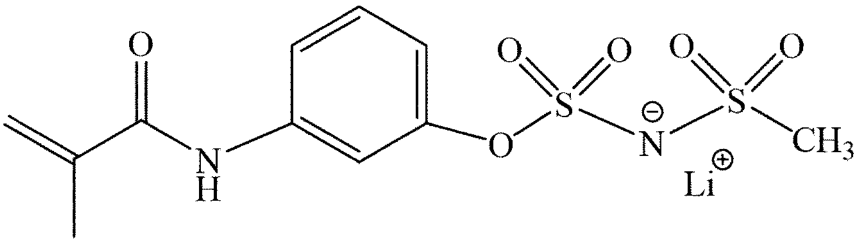

[Formula 2-45]

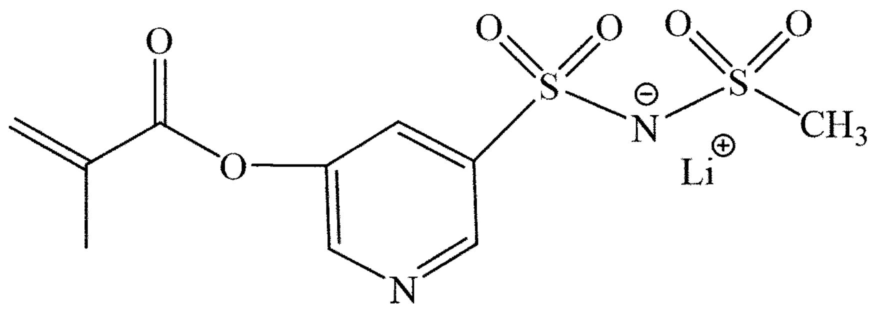

[Formula 2-46]

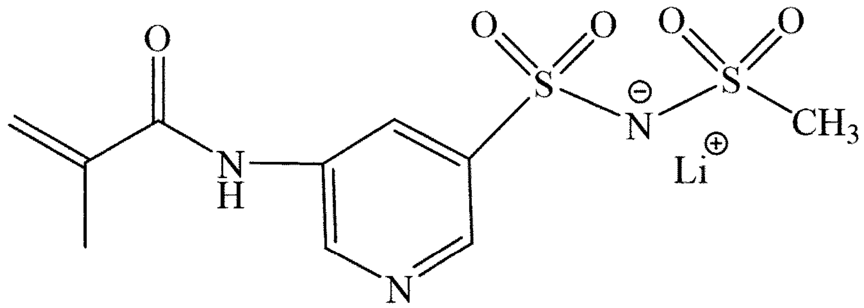

[Formula 2-47]

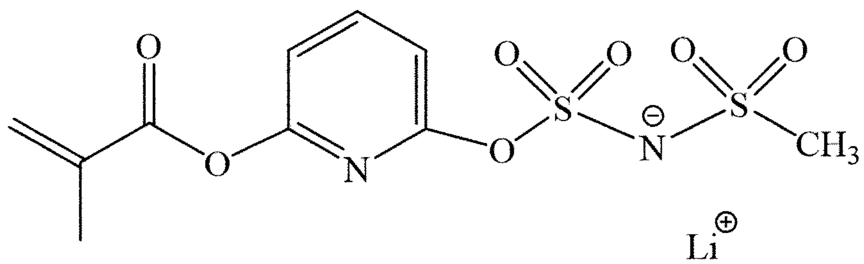

[Formula 2-48]

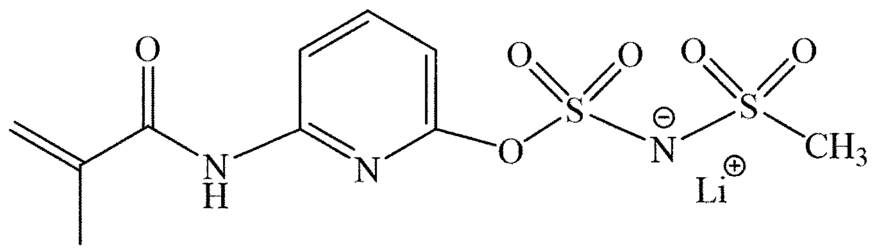

Meanwhile, in the electrolyte of the present disclosure, the first additive and the second additive may be present in a weight ratio of 1:0.05 to 1:2, a weight ratio of 1:0.1 to 1:2, and more preferably 1:0.1 to 1:1.

If the composition ratio between the first additive and the second additive satisfies the above-described range, a stable film may be formed on the surface of the positive electrode and the negative electrode, and as a result, it is possible to improve overall high-temperature performance (cycle properties, OCV stabilization, etc.). That is, if the second additive is present in a weight ratio of 2 or less, a uniform film may be formed on the surface of the negative electrode, so that it is possible to prevent the film from acting as a resistor, and to prevent corrosion of the positive electrode and negative electrode current collectors. Meanwhile, if the second additive is present in a slightly large amount, the thickness of a film

increases due to an increase in the content of the second additive reduced and decomposed on the surface of the negative electrode, so that the film may act as a resistor, and the second additive remaining without being decomposed after the activation may cause corrosion of the positive electrode current collector.

### (4-6) Other additives

Meanwhile, in order to prevent the electrolyte from being decomposed in a high-output environment and causing the negative electrode to collapse, or to further improve low-temperature high-rate discharge properties, high-temperature stability, overcharge prevention, an effect of suppressing battery expansion at high temperatures, and the like, the lithium secondary battery of the present disclosure may additionally include other additives in the electrolyte if necessary. If other additives are included, the other additives may be named as a third additive.

Representative examples of the above-described other additives may include any one selected from the group consisting of a cyclic carbonate-based compound, a sultone-based compound, a phosphate-based compound, a borate-based compound, a nitrile-based compound, a benzene-based compound, an amine-based compound, a silane-based compound, or a lithium salt-based compound.

The cyclic carbonate-based compound may include vinylene carbonate (VC).

The sultone-based compound may include any one selected from the group consisting of 1,3-propane sultone (PS), 1,4-butane sultone, ethene sultone, 1,3-propene sultone (PRS), 1,4-butene sultone, or 2-methyl-1,3-propene sultone.

The phosphate-based compound may include one or more compounds selected from the group consisting of lithium difluoro(bisoxalato)phosphate, lithium difluorophosphate, tris(trimethyl silyl)phosphate, tris(2,2,2-trifluoroethyl) phosphate, or tris(trifluoroethyl)phosphate.

The borate-based compound may include tetraphenylborate, or lithium oxalyldifluoroborate.

The nitrile-based compound may include any one selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, or 4-fluorophenylacetonitrile.

The benzene-based compound may include fluorobenzene, or the amine-based compound may include triethanolamine, ethylene diamine, or the like, and tetravinylsilane may be included as the silane-based compound.

The lithium salt-based compound is a compound different from the lithium salt included in the electrolyte, and may include one or more compounds selected from the group consisting of $LiPO_2F_2$, LiODFB, lithium bisoxalatoborate (LiBOB, $(LiB(C_2O_4)_2)$), $LiBF_4$, or LiDFOP.

Meanwhile, the above-described other additives may be used in a mixture of two or more thereof, and may be present in an amount of less than 10 wt%, specifically 0.01 wt% to 8.0 wt%, and preferably 0.05 wt% to 5.0 wt%, based on the total weight of the electrolyte. If the content of the above-described other additives satisfies the above-described range, it is possible to suppress side reactions caused by unreacted additives, and to further improve effects of improving low-temperature output and improving high-temperature storage properties and high-temperature lifespan properties of a battery.

The lithium secondary battery according to the present disclosure as described above may be usefully used in portable devices such as a mobile phone, a laptop computer, and a digital camera, in the field of electric cars such as a hybrid electric vehicle (HEV), and the like.

The external shape of the lithium secondary battery of the present disclosure is not particularly limited, but may be a cylindrical shape using a can, a square shape, a pouch shape, a coin shape, or the like.

The lithium secondary battery according to the present disclosure may be used in a battery cell which is used as a power source for a small-sized device, and may also be preferably used as a unit cell for a medium- and large-sized battery module including a plurality of battery cells.

## [Examples]

### Example 1.

### (Preparation of electrolyte)

In an organic solvent in which gamma-butyrolactone and ethylene carbonate were mixed in a volume ratio of 70:30, $LiPF_6$ was dissolved to 1.0 M, and then, 0.05 wt% of lithium nitrate ($LiNO_3$) as a first additive and 0.1 wt% of a sulfonyl imide compound represented by Formula 2-1 as a second additive (weight ratio between the first additive and the second additive = 1:2) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of positive electrode)**

A positive electrode active material ($LiFePO_4$), a conductive material (carbon black), and a binder (polyvinylidene fluoride, PVDF) were added in a weight ratio of 96:1:3 to N-methyl-2-pyrrolidone (NMP), which is a solvent, to prepare a positive electrode active material slurry (solid content of 67 wt%). The positive electrode active material slurry was coated on a positive electrode current collector (Al thin film) having a thickness of 15 $\mu$m, dried and roll-pressed to manufacture a positive electrode (double-sided loading amount: 48 mg/cm$^2$, single-side areal loading: 24 mg/cm$^2$).

**(Manufacturing of negative electrode)**

A negative electrode active material (artificial graphite), CMC-SBR as a binder, and carbon black as a conductive material were added in a weight ratio of 96:3.5:0.5 to distilled water, which is a solvent, to prepare a negative electrode active material slurry (solid content: 53 wt%). The negative electrode active material slurry was coated on a negative electrode current collector (Cu thin film) having a thickness of 8 $\mu$m, dried and roll-pressed to manufacture a negative electrode.

**(Manufacturing of secondary battery)**

The positive electrode and the negative electrode manufactured by the above-described methods were sequentially stacked with a polyethylene porous film to manufacture an electrode assembly according to a typical method, and then the electrode assembly was accommodated in a pouch-type secondary battery case, and the electrolyte prepared above was injected into the case to manufacture a lithium secondary battery.

**Example 2.**

**(Preparation of electrolyte)**

In an organic solvent in which gamma-butyrolactone and ethylene carbonate were mixed in a volume ratio of 70:30, $LiPF_6$ was dissolved to 1.0 M, and then, 0.1 wt% of lithium nitrate ($LiNO_3$) as a first additive and 0.1 wt% of a sulfonyl imide compound represented by Formula 2-1 as a second additive (weight ratio between the first additive and the second additive = 1:1) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 3.**

**(Preparation of electrolyte)**

In an organic solvent in which gamma-butyrolactone and ethylene carbonate were mixed in a volume ratio of 70:30, $LiPF_6$ was dissolved to 1.0 M, and then, 1.5 wt% of lithium nitrate ($LiNO_3$) as a first additive and 0.15 wt% of a sulfonyl imide compound represented by Formula 2-1 as a second additive (weight ratio between the first additive and the second additive = 1:0.1) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 4.**

**(Preparation of electrolyte)**

In an organic solvent in which gamma-butyrolactone and ethylene carbonate were mixed in a volume ratio of

70:30, $LiPF_6$ was dissolved to 1.0 M, and then, 3.0 wt% of lithium nitrate ($LiNO_3$) as a first additive and 0.15 wt% of a sulfonyl imide compound represented by Formula 2-1 as a second additive (weight ratio between the first additive and the second additive = 1:0.05) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 5.**

**(Preparation of electrolyte)**

In an organic solvent in which gamma-butyrolactone and ethylene carbonate were mixed in a volume ratio of 70:30, $LiPF_6$ was dissolved to 1.0 M, and then, 1.0 wt% of lithium nitrate ($LiNO_3$) as a first additive and 0.1 wt% of a sulfonyl imide compound represented by Formula 2-1 as a second additive (weight ratio between the first additive and the second additive = 1:0.1) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 6.**

**(Preparation of electrolyte)**

In an organic solvent in which gamma-butyrolactone and ethylene carbonate were mixed in a volume ratio of 70:30, $LiPF_6$ was dissolved to 1.0 M, and then, 1.0 wt% of lithium nitrate ($LiNO_3$) as a first additive and 0.5 wt% of a sulfonyl imide compound represented by Formula 2-1 as a second additive (weight ratio between the first additive and the second additive = 1:0.5) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 7.**

**(Preparation of electrolyte)**

In an organic solvent in which gamma-butyrolactone and ethylene carbonate were mixed in a volume ratio of 70:30, $LiPF_6$ was dissolved to 1.0 M, and then, 1.0 wt% of lithium nitrate ($LiNO_3$) as a first additive and 2.0 wt% of a sulfonyl imide compound represented by Formula 2-1 as a second additive (weight ratio between the first additive and the second additive = 1:2) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 8.**

**(Preparation of electrolyte)**

In an organic solvent in which gamma-butyrolactone and ethylene carbonate were mixed in a volume ratio of 70:30, $LiPF_6$ was dissolved to 1.0 M, and then, 1.0 wt% of lithium nitrate ($LiNO_3$) as a first additive and 0.5 wt% of a sulfonyl imide compound represented by Formula 2-6 as a second additive (weight ratio between the first additive and the second additive = 1:0.5) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 9.**

**(Preparation of electrolyte)**

In an organic solvent in which gamma-butyrolactone and ethylene carbonate were mixed in a volume ratio of 70:30, $LiPF_6$ was dissolved to 1.0 M, and then, 1.0 wt% of lithium nitrate ($LiNO_3$) as a first additive and 0.5 wt% of a sulfonyl imide compound represented by Formula 2-7 as a second additive (weight ratio between the first additive and the second additive = 1:0.5) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 10.**

**(Preparation of electrolyte)**

In an organic solvent in which gamma-butyrolactone and ethylene carbonate were mixed in a volume ratio of 70:30, $LiPF_6$ was dissolved to 1.0 M, and then, 1.0 wt% of lithium nitrate ($LiNO_3$) as a first additive and 0.5 wt% of a sulfonyl imide compound represented by Formula 2-8 as a second additive (weight ratio between the first additive and the second additive = 1:0.5) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 11.**

**(Preparation of electrolyte)**

In an organic solvent in which gamma-butyrolactone and ethylene carbonate were mixed in a volume ratio of 70:30, $LiPF_6$ was dissolved to 1.0 M, and then, 1.0 wt% of lithium nitrate ($LiNO_3$) as a first additive and 0.5 wt% of a sulfonyl imide compound represented by Formula 2-13 as a second additive (weight ratio between the first additive and the second additive = 1:0.5) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 12.**

**(Preparation of electrolyte)**

In an organic solvent in which gamma-butyrolactone and ethylene carbonate were mixed in a volume ratio of 70:30, $LiPF_6$ was dissolved to 1.0 M, and then, 1.0 wt% of lithium nitrate ($LiNO_3$) as a first additive and 0.5 wt% of a sulfonyl imide compound represented by Formula 2-19 as a second additive (weight ratio between the first additive and the second additive = 1:0.5) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 13.**

**(Preparation of electrolyte)**

In an organic solvent in which gamma-butyrolactone and ethylene carbonate were mixed in a volume ratio of 70:30, $LiPF_6$ was dissolved to 1.0 M, and then, 1.0 wt% of lithium nitrate ($LiNO_3$) as a first additive and 0.5 wt% of a sulfonyl imide compound represented by Formula 2-21 as a second additive (weight ratio between the first additive and the second additive = 1:0.5) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 14.**

**(Preparation of electrolyte)**

In an organic solvent in which gamma-butyrolactone and ethylene carbonate were mixed in a volume ratio of 70:30, $LiPF_6$ was dissolved to 1.0 M, and then, 1.0 wt% of lithium nitrate ($LiNO_3$) as a first additive and 0.5 wt% of a sulfonyl imide compound represented by Formula 2-31 as a second additive (weight ratio between the first additive and the second additive = 1:0.5) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 15.**

**(Preparation of electrolyte)**

In an organic solvent in which gamma-butyrolactone and ethylene carbonate were mixed in a volume ratio of 70:30, $LiPF_6$ was dissolved to 1.0 M, and then, 1.0 wt% of lithium nitrate ($LiNO_3$) as a first additive and 0.5 wt% of a sulfonyl imide compound represented by Formula 2-32 as a second additive (weight ratio between the first additive and the second additive = 1:0.5) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte

prepared above was injected.

**Example 16.**

**(Preparation of electrolyte)**

In an organic solvent in which gamma-butyrolactone and ethylene carbonate were mixed in a volume ratio of 70:30, $LiPF_6$ was dissolved to 1.0 M, and then, 1.0 wt% of lithium nitrate ($LiNO_3$) as a first additive and 0.5 wt% of a sulfonyl imide compound represented by Formula 2-43 as a second additive (weight ratio between the first additive and the second additive = 1:0.5) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 17.**

**(Preparation of electrolyte)**

In an organic solvent in which gamma-butyrolactone and ethylene carbonate were mixed in a volume ratio of 70:30, $LiPF_6$ was dissolved to 1.0 M, and then, 1.0 wt% of lithium nitrate ($LiNO_3$) as a first additive and 0.5 wt% of a sulfonyl imide compound represented by Formula 2-44 as a second additive (weight ratio between the first additive and the second additive = 1:0.5) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 18.**

**(Preparation of electrolyte)**

In an organic solvent in which gamma-butyrolactone and ethylene carbonate were mixed in a volume ratio of 99:1, $LiPF_6$ was dissolved to 1.0 M, and then, 1.0 wt% of lithium nitrate ($LiNO_3$) as a first additive and 0.5 wt% of a sulfonyl imide compound represented by Formula 2-1 as a second additive (weight ratio between the first additive and the second additive = 1:0.5) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 19.**

**(Preparation of electrolyte)**

In an organic solvent in which gamma-butyrolactone and ethylene carbonate were mixed in a volume ratio of 50:50, $LiPF_6$ was dissolved to 1.0 M, and then, 1.0 wt% of lithium nitrate ($LiNO_3$) as a first additive and 0.5 wt% of a sulfonyl imide compound represented by Formula 2-1 as a second additive (weight ratio between the first additive and the second additive = 1:0.5) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 20.**

**(Preparation of electrolyte)**

In an organic solvent in which gamma-butyrolactone and ethylene carbonate were mixed in a volume ratio of 70:30, $LiPF_6$ was dissolved to 1.0 M, and then, 4.0 wt% of lithium nitrate ($LiNO_3$) as a first additive and 4.0 wt% of a sulfonyl imide compound represented by Formula 2-1 as a second additive (weight ratio between the first additive and the second additive = 1:1) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 21.**

**(Preparation of electrolyte)**

In an organic solvent in which gamma-butyrolactone and ethylene carbonate were mixed in a volume ratio of 70:30, $LiPF_6$ was dissolved to 1.0 M, and then, 1.0 wt% of lithium nitrate ($LiNO_3$) as a first additive and 3.0 wt% of a sulfonyl imide compound represented by Formula 2-1 as a second additive (weight ratio between the first additive and the second additive = 1:3) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 22.**

**(Preparation of electrolyte)**

In an organic solvent in which gamma-butyrolactone and ethylene carbonate were mixed in a volume ratio of 40:60, $LiPF_6$ was dissolved to 1.0 M, and then, 1.0 wt% of lithium nitrate ($LiNO_3$) as a first additive and 0.5 wt% of a sulfonyl imide compound represented by Formula 2-1 as a second additive (weight ratio between the first additive and the second additive = 1:0.5) were added thereto, followed by adding 3.0 wt% of vinylene carbonate (VC) and 1.0 wt% of ethylene sulfate (Esa) as other additives to prepare an electrolyte for a lithium secondary battery of the present disclosure.

**(Manufacturing of secondary battery)**

A lithium secondary battery was manufactured in the same manner as in Example 1, except that the electrolyte prepared above was injected.

**Example 23.**

**(Manufacturing of positive electrode)**

A positive electrode active material ($LiFePO_4$), a conductive material (carbon black), and a binder (polyvinylidene fluoride, PVDF) were added in a weight ratio of 96:1:3 to N-methyl-2-pyrrolidone (NMP), which is a solvent, to prepare a positive electrode active material slurry (solid content of 67 wt%). The positive electrode active material slurry was coated on a positive electrode current collector (Al thin film) having a thickness of 15 μm, dried and roll-pressed to manufacture a

positive electrode (double-sided loading amount: 32 mg/cm$^2$, single-side areal loading: 16 mg/cm$^2$).

**(Manufacturing of secondary battery)**

A lithium secondary battery was manufactured in the same manner as in Example 1, except that the positive electrode manufactured above was applied.

**Example 24.**

**(Manufacturing of positive electrode)**

A positive electrode active material ($LiFePO_4$), a conductive material (carbon black), and a binder (polyvinylidene fluoride, PVDF) were added in a weight ratio of 96:1:3 to N-methyl-2-pyrrolidone (NMP), which is a solvent, to prepare a positive electrode active material slurry (solid content of 67 wt%). The positive electrode active material slurry was coated on a positive electrode current collector (Al thin film) having a thickness of 15 μm, dried and roll-pressed to manufacture a positive electrode (double-sided loading amount: 60 mg/cm$^2$, single-side areal loading: 30 mg/cm$^2$).

**(Manufacturing of secondary battery)**

A lithium secondary battery was manufactured in the same manner as in Example 1, except that the positive electrode manufactured above was applied.

**Comparative Example 1.**

**(Preparation of electrolyte)**

In an organic solvent in which gamma-butyrolactone and ethylene carbonate were mixed in a volume ratio of 70:30, $LiPF_6$ was dissolved to 1.0 M, and then, 1.0 wt% of lithium nitrate ($LiNO_3$) was added thereto as a first additive, and a second additive was not included, followed by adding 3.0 wt% of vinylene carbonate (VC) and 1.0 wt% of ethylene sulfate (Esa) as other additives to prepare an electrolyte.

**(Manufacturing of secondary battery)**

A lithium secondary battery was manufactured in the same manner as in Example 1, except that the electrolyte prepared above was injected.

**Comparative Example 2.**

**(Preparation of electrolyte)**

In an organic solvent in which gamma-butyrolactone and ethylene carbonate were mixed in a volume ratio of 70:30, $LiPF_6$ was dissolved to 1.0 M, and then, a first additive was not included, and 1.0 wt% of a sulfonyl imide compound represented by Formula 2-1 was added thereto as a second additive, followed by adding 3.0 wt% of vinylene carbonate (VC) and 1.0 wt% of ethylene sulfate (Esa) as other additives to prepare an electrolyte.

**(Manufacturing of secondary battery)**

A lithium secondary battery was manufactured in the same manner as in Comparative Example 1, except that the electrolyte prepared above was injected.

**Comparative Example 3.**

**(Preparation of electrolyte)**

In an organic solvent in which ethylene carbonate and ethylmethyl carbonate were mixed in a volume ratio of 30:70, $LiPF_6$ was dissolved to 1.0 M, and then, 1.0 wt% of lithium nitrate ($LiNO_3$) as a first additive and 0.5 wt% of a sulfonyl imide compound represented by Formula 2-1 as a second additive (weight ratio between the first additive and the second additive = 1:0.5) were added thereto, followed by adding 3.0 wt% of vinylene carbonate (VC) and 1.0 wt% of ethylene

sulfate (Esa) as other additives to prepare an electrolyte.

**(Manufacturing of secondary battery)**

A lithium secondary battery was manufactured in the same manner as in Comparative Example 1, except that the electrolyte prepared above was injected.

**Comparative Example 4.**

**(Preparation of electrolyte)**

In an organic solvent in which gamma-butyrolactone and ethylene carbonate were mixed in a volume ratio of 70:30, $LiPF_6$ was dissolved to 1.0 M, and then, 1.0 wt% of $LiBF_4$ as a first additive and 1.0 wt% of a sulfonyl imide compound represented by Formula 2-1 as a second additive (weight ratio between the first additive and the second additive = 1:1) were added thereto, followed by adding 3.0 wt% of vinylene carbonate (VC) and 1.0 wt% of ethylene sulfate (Esa) as other additives to prepare an electrolyte.

**(Manufacturing of secondary battery)**

A lithium secondary battery was manufactured in the same manner as in Comparative Example 1, except that the electrolyte prepared above was injected.

**Comparative Example 5.**

**(Preparation of electrolyte)**

In an organic solvent in which gamma-butyrolactone and ethylene carbonate were mixed in a volume ratio of 70:30, $LiPF_6$ was dissolved to 1.0 M, and then, 0.1 wt% of lithium nitrate ($LiNO_3$) as a first additive and 0.1 wt% of lithium bis (trifluoromethane sulfonyl) imide ($LiN(SO_2CF_3)_2$, LiTFSI) as a second additive (weight ratio between the first additive and the second additive = 1:1) were added thereto, followed by adding 3.0 wt% of vinylene carbonate (VC) and 1.0 wt% of ethylene sulfate (Esa) as other additives to prepare an electrolyte.

**(Manufacturing of secondary battery)**

A lithium secondary battery was manufactured in the same manner as in Comparative Example 1, except that the electrolyte prepared above was injected.

**Comparative Example 6.**

**(Manufacturing of positive electrode)**

A positive electrode active material ($LiFePO_4$), a conductive material (carbon black), and a binder (polyvinylidene fluoride, PVDF) were added in a weight ratio of 96:1:3 to N-methyl-2-pyrrolidone (NMP), which is a solvent, to prepare a positive electrode active material slurry (solid content of 67 wt%). The positive electrode active material slurry was coated on a positive electrode current collector (Al thin film) having a thickness of 15 $\mu$m, dried and roll-pressed to manufacture a positive electrode (double-sided loading amount: 62 mg/cm$^2$, single-side areal loading: 31 mg/cm$^2$).

**(Manufacturing of secondary battery)**

A lithium secondary battery was manufactured in the same manner as in Example 1, except that the positive electrode manufactured above was applied.

**[Experimental Examples]**

Experimental Example 1. Evaluation of high-temperature (45 °C) cycle properties

Each of the lithium secondary batteries prepared in Examples and Comparative Examples was charged at a high temperature (55 °C) to SOC 64% at a 0.1 C rate, and then subjected to aging (48 hours) and degassing processes to perform an activation process.

After the completion of the activation process, at room temperature (25 °C), each lithium secondary battery was charged to 3.8 V at a 0.1 C rate under constant current/constant voltage conditions, and then discharged to 2.5 V at a 0.33 C rate under a constant current condition to confirm an initial capacity.

Subsequently, each lithium secondary battery was charged at a high temperature (45 °C) to 3.8 V at a 0.33 C rate under constant current/constant voltage conditions, and then discharged to 2.5 V at a 0.33 C rate under a constant current condition, the whole process of which was set to one cycle, and then 100 cycles were performed, followed by measuring a discharge capacity. The driving of the lithium secondary battery was performed using a PNA-0506 charger/discharger (manufacturer: PNE solution).

A high-temperature cycle capacity retention rate (%) was calculated using the 100-th discharge ratio with respect to the obtained initial capacity, and the results are shown in Table 1 below.

[Table 1]

| | Capacity retention rate after high-temperature cycle (%) |
|---|---|
| Example 1 | 91.2 |
| Example 2 | 91.4 |
| Example 3 | 91.5 |
| Example 4 | 91.7 |
| Example 5 | 91.6 |
| Example 6 | 91.9 |
| Example 7 | 92.0 |
| Example 8 | 91.6 |
| Example 9 | 91.9 |
| Example 10 | 91.7 |
| Example 11 | 91.6 |
| Example 12 | 91.2 |
| Example 13 | 91.8 |
| Example 14 | 91.6 |
| Example 15 | 91.5 |
| Example 16 | 91.3 |
| Example 17 | 91.5 |
| Example 18 | 90.8 |
| Example 19 | 90.7 |
| Example 20 | 89.3 |
| Example 21 | 89.2 |
| Example 22 | 89.7 |
| Example 23 | 90.7 |
| Example 24 | 90.8 |
| Comparative Example 1 | 87.9 |
| Comparative Example 2 | 88.4 |
| Comparative Example 3 | 88.0 |
| Comparative Example 4 | 88.2 |
| Comparative Example 5 | 85.9 |
| Comparative Example 6 | 85.7 |

Referring to Table 1 above, it can be confirmed that the capacity retention rate (%) after the high-voltage, high-temperature cycles of each of the lithium secondary batteries of Examples 1 to 24 of the present disclosure is improved compared to that of each of the lithium secondary batteries of Comparative Examples 1 to 6.

Although the present disclosure has been described with reference to preferred embodiments of the present disclosure, it will be understood by those skilled in the art that various modifications and changes in form and details may be made therein without departing from the spirit and scope of the present disclosure as set forth in the following claims. Accordingly, the technical scope of the present disclosure is not intended to be limited to the contents set forth in the detailed description of the specification, but is intended to be defined by the appended claims.

## Claims

**1.** A lithium secondary battery comprising a positive electrode; a negative electrode; a separator; and an electrolyte, wherein:

the positive electrode includes a lithium iron phosphorous oxide as a positive electrode active material, and
a loading amount of the positive electrode is 32 mg/cm$^2$ to 60 mg/cm$^2$; and
the electrolyte includes:
a lithium salt; a first organic solvent; a second organic solvent; a first additive; and a second additive, wherein:

the first organic solvent is a cyclic lactone compound;
the second organic solvent is a carbonate-based organic solvent;
the first additive is a lithium nitrate ($LiNO_3$); and
the second additive is a sulfonyl imide compound.

**2.** The lithium secondary battery of claim 1, wherein the lithium iron phosphorous oxide comprises a compound represented by Formula 1 below:

[Formula 1] $$Li_{1+a}Fe_xM_y(PO_{4-b})X'_b$$

wherein in [Formula 1] above,
M is any one selected from the group consisting of Al, Mg, Ni, Co, Mn, Ti, Ga, Cu, V, Nb, Zr, Ce, In, Zn, or Y,
X' is one or more elements selected from the group consisting of F, S, or N, and
$-0.5 \leq a \leq 0.5$, $0 < x \leq 1$, $0 \leq y \leq 1$, and $0 \leq b \leq 0.3$.

**3.** The lithium secondary battery of claim 2, wherein the lithium iron phosphorous oxide comprises a lithium iron phosphate ($LiFePO_4$) or a lithium manganese iron phosphate ($LiFeMnPO_4$).

**4.** The lithium secondary battery of claim 1, wherein the loading amount of the positive electrode is 40 mg/cm$^2$ to 60 mg/cm$^2$.

**5.** The lithium secondary battery of claim 1, wherein the cyclic lactone compound comprises gamma-butyrolactone.

**6.** The lithium secondary battery of claim 1, wherein the carbonate-based organic solvent is a cyclic carbonate-based organic solvent.

**7.** The lithium secondary battery of claim 1, wherein the first organic solvent and the second organic solvent are present in a volume ratio of 50:50 to 99:1.

**8.** The lithium secondary battery of claim 1, wherein the first organic solvent and the second organic solvent are present in a volume ratio of 80:20 to 99:1.

**9.** The lithium secondary battery of claim 1, wherein the first additive is present in an amount of 0.05 wt% to 3.0 wt% based on the total weight of the electrolyte.

**10.** The lithium secondary battery of claim 1, wherein the sulfonyl imide compound comprises a compound represented by

Formula 2 below:

[Formula 2]

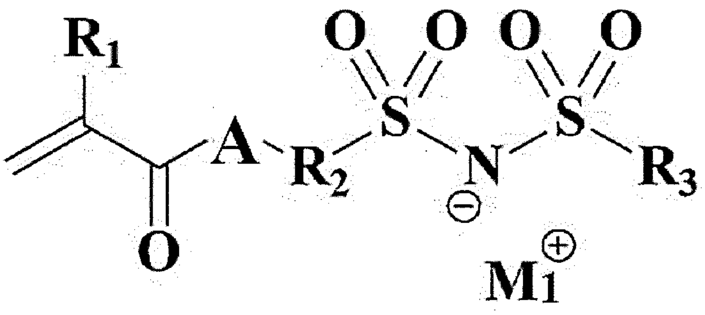

wherein in Formula 2 above,

$R_1$ is hydrogen or an alkyl group having 1 to 4 carbon atoms,
$R_2$ is an arylene group having 6 to 20 carbon atoms; an aryleneoxy group having 6 to 20 carbon atoms; a heteroarylene group having 5 to 10 carbon atoms including one or more heteroatoms selected from N, S, or O; or a heteroaryleneoxy group having 5 to 10 carbon atoms including one or more heteroatoms selected from N, S, or O,
$R_3$ is a fluoro group, an alkyl group having 1 to 10 carbon atoms, an alkoxy group having 1 to 10 carbon atoms, or

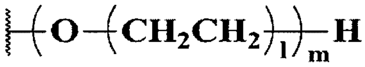
,

wherein in $R_3$, one or more hydrogens included in the alkyl group, the alkoxy group, and

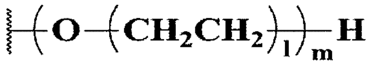

are substituted with a fluorine atom,
A is an oxygen (O) atom or $-NR_4$, $R_4$ is hydrogen or an alkyl group having 1 to 4 carbon atoms,
$M_1$ is any one selected from the group consisting of lithium, sodium, potassium, tetraalkylammonium having 1 to 4 carbon atoms, and tetraalkylphosphonium having 1 to 4 carbon atoms,
l is an integer of 1 to 6, and
m is an integer of 2 to 20.

**11.** The lithium secondary battery of claim 10, wherein in Formula 2 above,

$R_1$ is hydrogen or a methyl group,
$R_2$ is a phenylene group, a naphthalene group, an anthracenylene group, a biphenylene group, a phenyleneoxy group, a pyridinylene group, a thiophenylene group, a dioxolene group, or a dithiolene group,
$R_3$ is a fluoro group, a methyl group, an ethyl group, a propyl group, a trifluoromethyl group, a methoxy group, an ethoxy group,

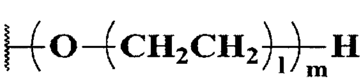
, or
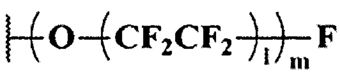
,

A is an oxygen (O) atom, -NH, or $-NCH_3$,
$M_1$ is lithium, l is an integer of 1 or 2, and m is an integer of 2 to 10.

**12.** The lithium secondary battery of claim 1, wherein the first additive and the second additive are present in a weight ratio of 1:0.05 to 1:2.

**13.** The lithium secondary battery of claim 1, wherein the first additive and the second additive are present in a weight ratio of 1:0.1 to 1:2.

**14.** The lithium secondary battery of claim 1, wherein the negative electrode comprises a carbon-based active material, a silicon-based active material, or a mixture of a carbon-based active material and a silicon-based active material.

## INTERNATIONAL SEARCH REPORT

International application No. **PCT/KR2024/018286**

**A. CLASSIFICATION OF SUBJECT MATTER**

**H01M 10/0567**(2010.01)i; **H01M 4/58**(2010.01)i; **H01M 10/052**(2010.01)i; **H01M 4/38**(2006.01)i; **H01M 4/48**(2010.01)i; **H01M 4/583**(2010.01)i; **H01M 4/587**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 10/0567(2010.01); H01M 10/052(2010.01); H01M 10/0525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 양극 활물질(cathode active material), 리튬철 인산화물 (lithium iron phosphate), 로딩(loading), 유기용매(organic solvent), 고리형 락톤(cyclic lactone), 카보네이트 (carbonate), 리튬 질산염(lithium nitrate, LiNO3), 술포닐이미드(sulfonyl imide)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2015-0030031 A (SAMSUNG SDI CO., LTD.) 19 March 2015 (2015-03-19) See claims 1, 3, 15 and 16; paragraphs [0036], [0038], [0051], [0053], [0062], [0066], [0083], [0101] and [0102]; manufacturing example 1; and example 1. | 1-14 |
| Y | KR 10-2023-0135833 A (LG ENERGY SOLUTION, LTD.) 26 September 2023 (2023-09-26) See claims 1, 3-5 and 8; and paragraph [0216], example 1. | 1-14 |
| Y | KR 10-2016-0077266 A (SAMSUNG SDI CO., LTD.) 04 July 2016 (2016-07-04) See claims 1 and 6; paragraphs [0026], [0027], [0030], [0035], [0036] and [0045]; and example 1. | 1-14 |
| A | KR 10-2019-0143566 A (LG CHEM, LTD.) 31 December 2019 (2019-12-31) See claims 1, 4, 8 and 9; paragraphs [0039], [0046], [0048], [0050], [0052] and [0071]; and example 1. | 1-14 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **27 February 2025** | **27 February 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/018286**

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0072530 A (UNIST(ULSAN NATIONAL INSTITUTE OF SCIENCE AND TECHNOLOGY)) 02 June 2022 (2022-06-02) See claims 1, 2, 4, 6, 9 and 11; and paragraphs [0062] and [0063]. | 1-14 |

Form PCT/ISA/210 (second sheet) (July 2022)

**INTERNATIONAL SEARCH REPORT**
**Information on patent family members**

International application No.
**PCT/KR2024/018286**

| Patent document cited in search report | Publication date (day/month/year) | Patent family member(s) | Publication date (day/month/year) |
|---|---|---|---|
| KR 10-2015-0030031 A | 19 March 2015 | KR 10-1749186 B1 | 03 July 2017 |
| | | US 2015-0072247 A1 | 12 March 2015 |
| | | US 9831527 B2 | 28 November 2017 |
| KR 10-2023-0135833 A | 26 September 2023 | CN 117203817 A | 08 December 2023 |
| | | EP 4307428 A1 | 17 January 2024 |
| | | JP 2024-514082 A | 28 March 2024 |
| | | US 2024-0213534 A1 | 27 June 2024 |
| | | WO 2023-177074 A1 | 21 September 2023 |
| KR 10-2016-0077266 A | 04 July 2016 | WO 2016-104894 A1 | 30 June 2016 |
| KR 10-2019-0143566 A | 31 December 2019 | KR 10-2543244 B1 | 14 June 2023 |
| KR 10-2022-0072530 A | 02 June 2022 | KR 10-2543244 B1 | 14 June 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230167269
- KR 1020240164617